# EUROPEAN PATENT APPLICATION

(11) **EP 4 793 232 A1**
(43) Date of publication of application: **19.08.2026**
(21) Application number: 24878328.4
(22) Date of filing: 08.01.2024
(51) Int. Cl.: C01B 25/45, H01M 4/58, H01M 4/136, H01M 10/0525

(54) **PREPARATION METHOD FOR LITHIUM IRON PHOSPHATE, POSITIVE ELECTRODE ACTIVE MATERIAL, POSITIVE ELECTRODE PLATE, BATTERY, AND POWER-CONSUMING DEVICE**

(30) Priority: 20.10.2023 CN 202311365889
(71) Applicant: Contemporary Amperex Technology Co., Limited, Ningde, Fujian 352100 (CN)
(72) Inventor: LIU, Hongyu, Ningde, Fujian 352100 (CN); BIE, Changfeng, Ningde, Fujian 352100 (CN); WU, Lili, Ningde, Fujian 352100 (CN); NI, Huan, Ningde, Fujian 352100 (CN); LIU, Na, Ningde, Fujian 352100 (CN)
(74) Representative: Gong, Jinping
(86) International application number: PCT/CN2024/071139
(87) International publication number: WO 2025/081671

(57) **Abstract**

Provided are a preparation method for lithium iron phosphate, a positive electrode active material, a positive electrode plate, a battery, and a power-consuming device. The preparation method for lithium iron phosphate comprises: dissolving a first iron source, a second iron source, a lithium source and a phosphorus source in a solvent to obtain a mixed slurry; and sintering the mixed slurry to obtain lithium iron phosphate, wherein the first iron source comprises at least one of iron oxide or first iron phosphate, and the second iron source comprises at least one of second iron phosphate or ferrous oxalate, the first iron phosphate has an iron to phosphorus ratio of 0.97-0.985, and the second iron phosphate has an iron to phosphorus ratio of 0.93-0.96. The primary particles of lithium iron phosphate, which have different particle sizes, can be mixed and matched, thus improving the compaction density of lithium iron phosphate and the energy density of the battery.

## Description

### CROSS-REFERENCE TO RELATED APPLICATIONS

The present application claims priority to Chinese Patent Application No. 202311365889.9, filed with the China National Intellectual Property Administration on October 20, 2023 and entitled "PREPARATION METHOD FOR LITHIUM IRON PHOSPHATE, POSITIVE ELECTRODE ACTIVE MATERIAL, POSITIVE ELECTRODE PLATE, BATTERY, AND POWER-CONSUMING DEVICE", which is incorporated herein by reference in its entirety.

### TECHNICAL FIELD

The present application relates to the technical field of batteries, and more particularly, to a preparation method for lithium iron phosphate, a positive electrode active material, a positive electrode plate, a battery, and a power-consuming device.

### BACKGROUND

In recent years, lithium-ion batteries have been used in increasingly wide fields, for example, energy storage power supply fields such as wind power stations, water power stations, thermal power stations, and solar power stations, and a plurality of fields such as electric bicycles, electric motorcycles, electric vehicles, military equipment, and aerospace. While lithium-ion batteries have made great progress, higher requirements are put forward for the performance of the lithium-ion batteries.

Therefore, how to improve the energy density of lithium-ion batteries is an urgent problem to be resolved.

### SUMMARY

The present application is conducted in view of the aforementioned subject, and an objective thereof is to provide a preparation method for lithium iron phosphate, a positive electrode active material, a positive electrode plate, a battery, and a power-consuming device, thereby improving the energy density of the battery.

According to a first aspect, the present application provides a preparation method for lithium iron phosphate, which includes: dissolving a first iron source, a second iron source, a lithium source, a phosphorus source, and a carbon source in a solvent to obtain a mixed slurry; and subjecting the mixed slurry to sintering treatment to obtain lithium iron phosphate. The first iron source includes at least one of iron oxide or first iron phosphate. The second iron source includes at least one of second iron phosphate or ferrous oxalate. An iron-to-phosphorus ratio of the first iron phosphate is 0.97 to 0.985. An iron-to-phosphorus ratio of the second iron phosphate is 0.93 to 0.96.

In examples of the present application, iron sources for preparing lithium iron phosphate include the first iron source and the second iron source. The first iron source includes at least one of iron oxide or first iron phosphate. The second iron source includes at least one of second iron phosphate or ferrous oxalate. The iron-to-phosphorus ratio of the first iron phosphate is 0.97 to 0.985. The iron-to-phosphorus ratio of the second iron phosphate is 0.93 to 0.96. By using the aforementioned first iron source and second iron source as the iron sources for preparing lithium iron phosphate, the prepared lithium iron phosphate has different primary particle sizes, and lithium iron phosphate particles with different particle sizes can be blended, thereby improving the compaction density of the lithium iron phosphate and improving the energy density of the battery.

In one possible embodiment, the iron-to-phosphorus ratio of the second iron phosphate is 0.94 to 0.96.

In the examples of the present application, by setting the iron-to-phosphorus ratio in the second iron phosphate to 0.94 to 0.96, the compaction density of the lithium iron phosphate and the battery performance can be further improved.

In one possible embodiment, a molar ratio value of iron element in the first iron source to iron element in the second iron source is 0.5 to 4.

In the examples of the present application, using the first iron source and the second iron source can respectively yield lithium iron phosphate with relatively small particle sizes and lithium iron phosphate with relatively large particle sizes, thereby achieving blending of lithium iron phosphate particles with different particle sizes. By setting the molar ratio value of the iron element in the first iron source to the iron element in the second iron source to 0.5 to 4, proper blending of primary particles with different particle sizes can be achieved, thereby effectively improving the compaction density of the lithium iron phosphate and the energy density of the battery.

In one possible embodiment, a volume average particle size Dv50 of the mixed slurry is 0.3 µm to 0.8 µm.

In the examples of the present application, by setting the volume average particle size Dv50 of the mixed slurry to 0.3 µm to 0.8 µm, the particle size of the lithium iron phosphate can be maintained within a proper range.

In one possible embodiment, a molar ratio of iron in the first iron source and the second iron source to lithium in the lithium source to phosphorus in the phosphorus source is (0.9 to 1):(0.96 to 1.06):(0.95 to 1.05). Optionally, a molar ratio of lithium element in the lithium source to phosphorus element in the phosphorus source is (1.003 to 1.01):1.

In the examples of the present application, by setting the molar ratio of iron in the iron sources to lithium in the lithium source to phosphorus in the phosphorus source to (0.9 to 1):(0.96 to 1.06):(0.95 to 1.05), that is, setting a molar ratio of iron element to lithium element to phosphorus element to the aforementioned value, losses of lithium element and phosphorus element during the preparation process can be compensated for, resulting in lithium iron phosphate with better performance.

In the examples of the present application, by controlling the molar ratio of the lithium element in the lithium source to the phosphorus element in the phosphorus source to (1.003 to 1.01):1, the degree of order of ions between Li element and Fe element in the formed lithium iron phosphate is improved, Li-Fe antisite defects in the lithium iron phosphate is effectively reduced, a lithium-ion transport path length is controlled, and a reversible capacity of the lithium iron phosphate is improved.

In one possible embodiment, the first iron source includes iron oxide, and the second iron source includes second iron phosphate.

In the above solution, by configuring the first iron source to include the iron oxide and the second iron source to include the second iron phosphate with the iron-to-phosphorus ratio of 0.93 to 0.96, the iron oxide and the second iron phosphate, being readily available and widely applicable, not only enable the preparation of lithium iron phosphate with a blend of different particle sizes, thereby improving the compaction density of the lithium iron phosphate and the energy density of the battery, but also allow for widespread industrial application.

In one possible embodiment, a primary particle size of the iron oxide is 0.05 µm to 0.6 µm.

In the examples of the present application, by using the iron oxide with the primary particle size of 0.05 µm to 0.6 µm, the iron oxide easily reacts during the reaction, facilitating the formation of better lithium iron phosphate.

In one possible embodiment, the primary particle size of the iron oxide is 0.05 µm to 0.4 µm.

In the examples of the present application, by using the iron oxide with the primary particle size of 0.05 µm to 0.4 µm, lithium iron phosphate with even better performance can be obtained.

In one possible embodiment, the sintering includes: in an inert gas, increasing a temperature of the mixed slurry to 450°C to 600°C and maintaining for 2 h to 5 h, and then increasing the temperature to 700°C to 850°C and maintaining for 6 h to 15 h.

In the examples of the present application, by employing two reaction intervals of 450°C to 600°C and 700°C to 850°C, the first iron source and the second iron source react with the phosphorus source and the lithium source respectively to form lithium iron phosphate with larger and smaller particle sizes, thereby achieving blending of lithium iron phosphate particles with different particle sizes.

In one possible embodiment, the method further includes: dissolving a carbon source in the solvent to jointly form the mixed slurry. The carbon source includes at least one of sucrose, glucose, dextrin, citric acid, fructose, or starch.

In the examples of the present application, by adding a carbon material, on the one hand, the conductivity of the lithium iron phosphate can be increased, and on the other hand, the carbon material can react with metallic iron powder at a high temperature to form an Fe-C compound. This reduction reaction helps lower the reaction temperature, promote the progress of the reaction, and effectively control a crystal structure and particle morphology of a lithium iron phosphate product.

In one possible embodiment, a mass ratio value of the carbon source to the lithium iron phosphate is 0.01 to 0.1.

In the examples of the present application, by setting the mass ratio value of the carbon source to the lithium iron phosphate to 0.01 to 0.1, the carbon source can fulfill its function without affecting the energy density of the battery.

In one possible embodiment, the method further includes: dissolving a dispersant in the solvent to jointly form the mixed slurry. The dispersant includes at least one of polyethylene glycol, polyvinyl alcohol, or polyvinylpyrrolidone.

In the examples of the present application, by including the dispersant in the mixed slurry, the viscosity of the mixed slurry can be reduced, thereby facilitating subsequent operations.

In some embodiments, a mass ratio value of the dispersant to the lithium iron phosphate is 0.005 to 0.08.

In the examples of the present application, by setting the mass ratio value of the dispersant to the lithium iron phosphate to 0.005 to 0.08, the dispersant can fulfill its function without affecting the energy density of the battery.

In some embodiments, the method further includes: dissolving an additive in the solvent to jointly form the mixed slurry. The additive includes a compound containing at least one element selected from Ti, Ga, Sr, W, Mg, Si, Y, Zr, B, Mo, or La; or the additive includes a substance containing at least one element selected from Al, Na, K, Mg, Cu, Mn, Cr, Zn, Pb, Ca, Co, Ni, Sr, Nb, Ti, V, B, S, Si, N, F, Cl, or Br.

In the examples of the present application, by including the additive in the mixed slurry, the additive enters a crystal lattice, which can increase the diffusion rate of lithium ions, thereby improving ionic conductivity and rate performance.

In some embodiments, a mass ratio value of the additive to the lithium iron phosphate is 0.0001 to 0.0005.

In the examples of the present application, by setting the mass ratio value of the additive to the lithium iron phosphate to 0.0001 to 0.0005, the additive can fulfill its function without affecting the energy density of the battery.

In one possible embodiment, the lithium source includes at least one of lithium dihydrogen phosphate, lithium carbonate, lithium hydroxide, lithium phosphate, lithium acetate, or lithium oxalate.

In one possible embodiment, the phosphorus source includes at least one of phosphoric acid, ammonium dihydrogen phosphate, diammonium hydrogen phosphate, or lithium dihydrogen phosphate.

According to a second aspect, the present application provides a positive electrode active material. The positive electrode active material includes lithium iron phosphate prepared by the preparation method according to any embodiment in the first aspect of the present application.

In one possible embodiment, a compaction density of the lithium iron phosphate under 3 T is greater than or equal to 2.5 g/cm³. Optionally, in an FTIR spectrogram of the lithium iron phosphate, a characteristic absorption peak position of PO₄³⁻ is ≤ 995 cm⁻¹. Optionally, a powder compaction density of the lithium iron phosphate under 3 T ranges from 2.5 g/cm³ to 2.65 g/cm³, and further optionally ranges from 2.55 g/cm³ to 2.65 g/cm³. Optionally, in an FTIR spectrogram of a phosphate-based positive electrode material, a characteristic absorption peak position of PO₄³⁻ is ≤ 984 cm⁻¹, and optionally the characteristic absorption peak position of PO₄³⁻is ≤ 982.5 cm⁻¹.

In the examples of the present application, the lithium iron phosphate with a blend of different particle sizes prepared by the preparation method of the present application has a compaction density of not less than 2.5 g/cm³, which helps improve the capacity of the battery.

The characteristic absorption peak position of PO₄³⁻ in the FTIR spectrogram of the lithium iron phosphate being ≤ 984 cm⁻¹ indicates that the lithium iron phosphate has a lower degree of Li-Fe antisite defects and a more regular crystal lattice, and therefore the material has a higher reversible capacity.

According to a third aspect, the present application provides a phosphate-based positive electrode material. In an FTIR spectrogram of the phosphate-based positive electrode material, a characteristic absorption peak position of PO₄³⁻ is ≤ 995 cm⁻¹, and a powder compaction density of the phosphate-based positive electrode material under 226.0738 MPa is 2.5 g/cm³ or above. The characteristic absorption peak position of PO₄³⁻ in the FTIR spectrogram of the lithium iron phosphate being ≤ 995 cm⁻¹ indicates that the lithium iron phosphate has a lower degree of Li-Fe antisite defects and a more regular crystal lattice, and therefore the material has a higher reversible capacity.

In some examples, the powder compaction density of the phosphate-based positive electrode material under 226.0738 MPa ranges from 2.5 g/cm³ to 2.65 g/cm³, and optionally ranges from 2.55 g/cm³ to 2.65 g/cm³.

In some examples, in the FTIR spectrogram of the phosphate-based positive electrode material, the characteristic absorption peak position of PO₄³⁻ is ≤ 984 cm⁻¹, and the characteristic absorption peak position of PO₄³⁻ is ≤ 982.5 cm⁻¹.

In some examples, the phosphate-based positive electrode material includes at least one of lithium iron phosphate, a doping modified substance thereof, and/or a coating modified substance thereof; optionally, the phosphate-based positive electrode material includes a material having a molecular formula of LiₘAₐFeₓDₐP_{y}EₑO_{z}Gg, where A includes at least one element selected from Al, Na, K, or Mg; D includes at least one element selected from Cu, Mn, Cr, Zn, Pb, Ca, Co, Ni, Sr, Nb, Ti, or V; E includes at least one element selected from B, S, Si, or N; G includes at least one element selected from S, F, Cl, or Br; m is selected from a range of 0.5 to 1.15; a is selected from a range of 0 to 0.1; x is selected from a range of 0.5 to 1; d is selected from a range of 0 to 0.5; y is selected from a range of 0.5 to 1; e is selected from a range of 0 to 0.5; z is selected from a range of 3.5 to 4; and g is selected from a range of 0 to 0.5. For the phosphate-based positive electrode material formed through element doping, the doping elements enter the crystal lattice, which can increase the diffusion rate of lithium ions, thereby improving ionic conductivity and rate performance.

In some examples, the phosphate-based positive electrode material further includes carbon. Optionally, a mass content of the carbon in the phosphate-based positive electrode material satisfies 1.00% ≤ Wc ≤ 1.90%, and/or optionally, a powder resistivity of the phosphate-based positive electrode material under 8 MPa satisfies S ≤ 90 Ω·cm. Further optionally, further optionally, the mass content of the carbon in the phosphate-based positive electrode material satisfies 1.20% ≤ Wc ≤ 1.80%, and/or the powder resistivity of the phosphate-based positive electrode material under 8 MPa satisfies S ≤ 60 Ω·cm.

According to a fourth aspect, the present application provides a positive electrode plate, which includes: a positive electrode current collector and a positive electrode film layer disposed on at least one side of the positive electrode current collector. The positive electrode film layer includes lithium iron phosphate prepared by the preparation method according to any embodiment in the first aspect, or the positive electrode active material according to the second aspect, or the phosphate-based positive electrode material according to the third aspect.

In some examples, the positive electrode film layer satisfies one or more of the following conditions:
1) a quantity content of the phosphate-based positive electrode material with a particle size in a range of 50 nm to 200 nm is 40% to 80%; and
2) a cross-sectional area percentage content of the phosphate-based positive electrode material with a particle size of not less than 1500 nm is 30% to 80%.

According to a fifth aspect, the present application provides a battery cell, which includes the positive electrode plate according to any embodiment in the fourth aspect.

According to a sixth aspect, the present application provides a battery, which includes the battery cell according to the fifth aspect of the present application.

According to a seventh aspect, the present application provides a power-consuming device, which includes the battery according to the sixth aspect of the present application.

### BRIEF DESCRIPTION OF THE DRAWINGS

To describe the technical solutions in the examples of the present application more clearly, the accompanying drawings required for describing the examples of the present application are briefly described below. Apparently, the accompanying drawings described below show only some examples of the present application, and those of ordinary skill in the art may still derive other drawings from these accompanying drawings without creative efforts.
FIG. 1 is a flowchart of a preparation method for lithium iron phosphate according to an embodiment of the present application;
FIG. 2 is a schematic structural diagram of a positive electrode plate according to an embodiment of the present application;
FIG. 3 is a schematic diagram of a battery cell according to an embodiment of the present application;
FIG. 4 is a schematic structural diagram of a battery cell according to an embodiment of the present application;
FIG. 5 is a schematic diagram of a battery according to an embodiment of the present application;
FIG. 6 is a schematic structural diagram of a battery according to an embodiment of the present application;
FIG. 7 is a schematic structural diagram of a power-consuming device according to an embodiment of the present application;
FIG. 8 is an SEM image of lithium iron phosphate according to an embodiment of the present application; and
FIG. 9 is an SEM image of lithium iron phosphate according to an embodiment of the related art.

### Reference numerals

1 - power-consuming device;
11 - case, 12 - electrode assembly, 13 - cover plate;
100 - battery cell, 121 - positive electrode plate, 122 - positive electrode current collector, 123 - positive electrode film layer, 400 - battery, 401 - upper box, 402 - lower box, 500 - motor, 600 - controller.

### DETAILED DESCRIPTION

Hereinafter, embodiments of a preparation method for lithium iron phosphate, a positive electrode active material, a positive electrode plate, a battery cell, a battery, and a power-consuming device of the present application will be described in detail with appropriate reference to the drawings, but there may be cases where unnecessary detailed descriptions are omitted. For example, there are cases where detailed descriptions of well-known items and repeated descriptions of actually identical structures are omitted. In addition, the drawings and subsequent descriptions are provided for those skilled in the art to fully understand the present application, and are not intended to limit the subject matters recited in the claims.

A "range" disclosed in the present application is defined in the form of lower and upper limits. A given range is defined by selecting a lower limit and an upper limit, and the selected lower limit and upper limit define the boundaries of the specific range. The range defined in this way may include or may not include end values, and may be arbitrarily combined, that is, any lower limit may be combined with any upper limit to form a new range. For example, if ranges 60 to 120 and 80 to 110 are listed for a specific parameter, it is to be understood that the ranges of 60 to 110 and 80 to 120 are also contemplated. In addition, if the minimum range values 1 and 2 and the maximum range values 3, 4 and 5 are listed, the following ranges are all contemplated: 1 to 3, 1 to 4, 1 to 5, 2 to 3, 2 to 4, and 2 to 5. In the present application, unless otherwise specified, a numerical range "a to b" represents an abbreviated representation of any combination of real numbers between a to b, where both a and b are real numbers. For example, the numerical range "0 to 5" represents that all real numbers between "0 and 5" are listed herein, and "0 to 5" is merely an abbreviated representation of the combination of these numbers. In addition, when a parameter is expressed as an integer ≥2, it is equivalent to disclosing that the parameter is, for example, an integer of 2, 3, 4, 5, 6, 7, 8, 9, 10, 11, 12, and the like.

Unless otherwise specified, all the examples and optional examples of the present application may be combined with each other form new technical solutions.

Unless otherwise specified, all technical features and optional technical features of the present application may be combined with each other to form new technical solutions.

Unless otherwise specified, all the steps in the present application can be performed sequentially or randomly, and optionally, are performed sequentially. For example, the method includes steps (a) and (b), represents that the method may include steps (a) and (b) performed sequentially, or may include steps (b) and (a) performed sequentially. For example, the method may further include step (c), represents that step (c) may be added to the method in any order. For example, the method may include steps (a), (b), and (c), or may include steps (a), (c), and (b), or may include steps (c), (a), and (b).

The term "above", "below", "greater than", or "less than" used in the present application includes a number itself. For example, "at least one" means one or more, and "at least one of A and B" means "A", "B", or "A and B".

In the 21st century, humanity faces two severe challenges: energy crisis and environmental pollution. Therefore, the development and research of clean and renewable new energy sources hold profound significance. Among which, various types of automobiles account for about 40% of petroleum consumption, and 42% of global atmospheric pollution originates from emissions from transportation vehicles. Countries around the world attach great importance to electric vehicles. In China's 863 Program, the development of electric trains is also listed as an important strategic direction. Research on power batteries, which serve as the on-board power source, has become a major bottleneck in the development of power vehicles. Main candidates for power batteries currently include nickel-metal hydride batteries, lithium-ion batteries, and fuel cells. Considering the cost performance, lithium-ion batteries hold a significant advantage. Compared with traditional materials, lithium-ion batteries as energy storage materials have the advantages of high voltage, high specific capacity, long cycle life, and good safety performance. They are widely used in portable electronic devices, electric vehicles, aerospace, military engineering, and other fields, possessing broad application scenarios and substantial economic benefits.

To a large extent, the performance of the positive electrode material determines the comprehensive performance of the entire lithium-ion battery. Lithium iron phosphate (LiFeO₄) with an olivine-type crystal structure has outstanding advantages such as high specific discharge capacity, long cycle life, good safety, low cost, and being non-toxic and non-polluting, therefore, having wide application prospects. However, a low compaction density thereof is a significant obstacle limiting its development in the commercial battery industry. Compaction density has relatively significant impact on battery performance, and compaction density is closely related to electrode plate specific capacity, efficiency, internal resistance, and battery cycle performance. Furthermore, generally speaking, the greater the compaction density, the higher the battery capacity that can be achieved. Therefore, compaction density is also regarded as one of the reference indicators for material energy density. Under certain process conditions, the greater the compaction density, the higher the battery capacity. Especially during the current peak period of new energy vehicle development, for lithium iron phosphate to be widely used in new energy electric vehicles and hybrid electric vehicles, improving the compaction density of lithium iron phosphate should be a crucial prerequisite.

Currently, the market mainly improves the compaction density of lithium iron phosphate by enlarging the primary particles of lithium iron phosphate or by blending primary particles with different particle sizes. However, enlarging the primary particles may lengthen a lithium-ion deintercalation path, affecting the material kinetics and consequently leading to performance degradation; and blending the primary particles with different particle sizes typically improves the compaction density through sand milling of particles of varying particle sizes for blending or direct mixing of lithium iron phosphate with different particle sizes, which introduces additional control points in the production process, resulting in significant batch-to-batch variability, and hindering the widespread application of lithium iron phosphate.

In view of this, the present application provides a preparation method for lithium iron phosphate. The preparation method for lithium iron phosphate includes: dissolve and mix a first iron source, a second iron source, a lithium source, and a phosphorus source in a solvent to obtain a mixed slurry, and then subject the mixed slurry to sintering treatment to obtain lithium iron phosphate. The first iron source includes at least one of iron oxide or first iron phosphate. The second iron source includes at least one of second iron phosphate or ferrous oxalate. By using the first iron source and the second iron source to prepare lithium iron phosphate, not only can blending of different particle sizes of lithium iron phosphate be achieved, thereby increasing the compaction density of the lithium iron phosphate and the energy density of the battery, but the preparation method is also simple, low-cost, and suitable for industrial production.

Hereinafter, the preparation method for lithium iron phosphate, the positive electrode active material, the positive electrode plate, the battery cell, the battery, and the power-consuming device of the present application will be described with reference to the drawings.

Furthermore, the technical solution of the present application is applicable to various types of batteries such as lithium-ion batteries, which is not limited herein. For convenience of description, lithium-ion batteries are used as an example in the following description.

### [Preparation Method for Lithium Iron Phosphate]

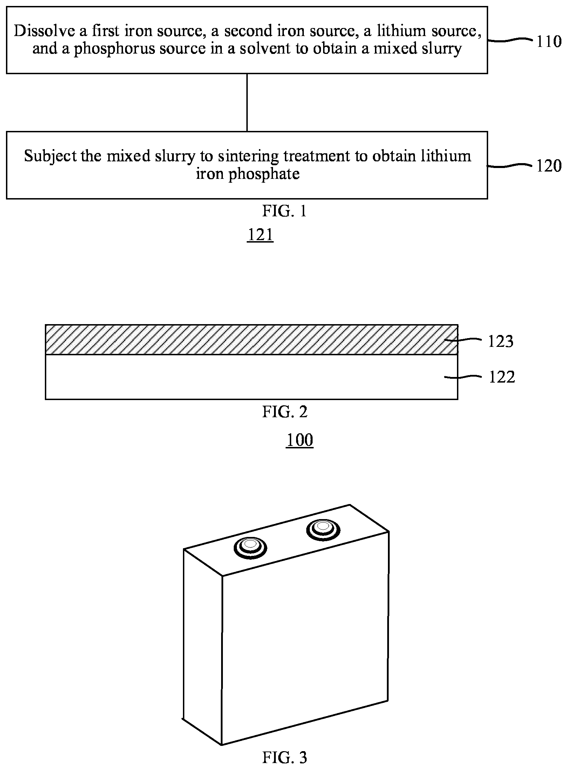

According to a first aspect, the present application provides a preparation method for lithium iron phosphate. FIG. 1 is a flowchart of a preparation method for lithium iron phosphate according to an embodiment of the present application. As shown in FIG. 1, the preparation method includes:

110: dissolve a first iron source, a second iron source, a lithium source, and a phosphorus source in a solvent to obtain a mixed slurry; and

120: subject the mixed slurry to sintering treatment to obtain lithium iron phosphate.

The first iron source includes at least one of iron oxide or first iron phosphate. The second iron source includes at least one of second iron phosphate or ferrous oxalate. An iron-to-phosphorus ratio of the first iron phosphate is 0.97 to 0.985. An iron-to-phosphorus ratio of the second iron phosphate is 0.93 to 0.96.

By using the first iron source and the second iron source, the prepared lithium iron phosphate has varying particle sizes, enabling a high compaction density for the lithium iron phosphate, thereby improving the energy density of the battery.

Both reaction mechanisms of different iron sources with the lithium source and the phosphorus source for forming lithium iron phosphate and required synthesis temperatures for forming lithium iron phosphate are different. The temperature required for iron oxide to react with the lithium source and the phosphorus source to form lithium iron phosphate needs to be 600°C or above. The temperature required for iron phosphate to react with the lithium source and the phosphorus source to form lithium iron phosphate needs to be 500°C or above. The temperature required for ferrous oxalate to react with the lithium source and the phosphorus source to form lithium iron phosphate needs to be 400°C or above. Therefore, compared to iron phosphate and iron oxide, during the sintering treatment, when the temperature of the mixed slurry is increased to 400°C or above, ferrous oxalate can react preferentially with the lithium source and the phosphorus source to form ferrous phosphate crystal nuclei. As the sintering temperature further increases to 500°C or above, iron phosphate, compared to iron oxide, can react preferentially with the lithium source and the phosphorus source to form lithium iron phosphate crystal nuclei. Iron oxide, compared to ferrous oxalate and iron phosphate, forms lithium iron phosphate crystal nuclei last. The preferentially formed lithium iron phosphate crystal nuclei further grow as the temperature increases, ultimately forming lithium iron phosphate with larger primary particle sizes. The later-formed lithium iron phosphate crystal nuclei, due to their slower growth rate, ultimately form lithium iron phosphate with smaller primary particle sizes.

Regarding the second iron phosphate with the iron-to-phosphorus ratio of 0.93 to 0.96, it can be referred to as low iron-to-phosphorus ratio iron phosphate. The first iron phosphate with the iron-to-phosphorus ratio of 0.97 to 0.985 can be referred to as high iron-to-phosphorus ratio iron phosphate. When low iron-to-phosphorus ratio iron phosphate is used, the P element facilitates the growth of lithium iron phosphate crystal nuclei, which causes the low iron-to-phosphorus ratio iron phosphate, as an iron source compared to the iron oxide or the first iron phosphate, to allow the lithium iron phosphate crystal nuclei to ultimately form lithium iron phosphate with larger primary particle sizes as the temperature further increases. Furthermore, when iron is present in a small amount, iron vacancies can form, which can lower the diffusion energy barrier for Li⁺, increase the possibility of lithium ion transport through adjacent channels, increase the diffusion rate, and improve the rate performance of the material. Meanwhile, by controlling the amount of low iron-to-phosphorus ratio iron phosphate, the generation of a small amount of Li₃PO₄ can be controlled, and the inherent ionic conductivity of Li₃PO₄ may also increase the Li⁺ diffusion rate and the high-rate performance of the material, without causing a decrease in the capacity of the lithium iron phosphate material. When high iron-to-phosphorus ratio iron phosphate is used, it can, compared to the ferrous oxalate or the second iron phosphate, form lithium iron phosphate with smaller primary particle sizes when reacting with the lithium source and the phosphorus source. In summary, by using the iron oxide and/or the first iron phosphate as the first iron source, and the ferrous oxalate and/or the second iron phosphate as the second iron source, lithium iron phosphate with larger primary particle sizes and lithium iron phosphate with smaller primary particle sizes can be obtained. This creates a gradation of primary particles of lithium iron phosphate with different particle sizes, thereby giving the prepared lithium iron phosphate material a high compaction density and improving the energy density of the battery.

It should be noted here that the terms "larger-particle lithium iron phosphate" and "smaller-particle lithium iron phosphate" mentioned herein both refer to the primary particle size of lithium iron phosphate. The primary particle size refers to the grain size of a substance, also referred to as the original particle size, i.e., the grain size of a single lithium iron phosphate particle.

In addition, the reference in the examples of the present application to improving the compaction density by blending lithium iron phosphate particles with different particle sizes is because that the lithium iron phosphate contains both large lithium iron phosphate particles and small lithium iron phosphate particles. The small lithium iron phosphate particles can occupy the interstices between the larger lithium iron phosphate particles, thereby increasing the compaction density of the lithium iron phosphate.

The iron-to-phosphorus ratio M refers to a molar ratio of iron (Fe) element to phosphorus (P) element in a compound. Referring to the national standard HG/T 4701-2021, the iron-to-phosphorus ratio M can be calculated using the following formula: M = (w1 / w2) × 0.5545, where w1 is the mass content of Fe and w2 is the mass content of P.

In the above solution, the iron sources for preparing lithium iron phosphate include the first iron source and the second iron source. The first iron source includes at least one of iron oxide or first iron phosphate. The second iron source includes at least one of second iron phosphate or ferrous oxalate. The iron-to-phosphorus ratio of the first iron phosphate is 0.97 to 0.985. The iron-to-phosphorus ratio of the second iron phosphate is 0.93 to 0.96. By using the aforementioned first iron source and second iron source as iron sources for preparing a positive electrode material, the prepared lithium iron phosphate has different primary particle sizes, and lithium iron phosphate particles with different particle sizes can be blended, thereby improving the compaction density of the lithium iron phosphate and improving the energy density of the battery.

In some embodiments, the iron-to-phosphorus ratio of the second iron phosphate is 0.94 to 0.96. In the above solution, by setting the iron-to-phosphorus ratio in the second iron phosphate to 0.94 to 0.96, the compaction density of the lithium iron phosphate and the battery performance can be further improved.

In some embodiments, a molar ratio value of iron element in the first iron source to iron element in the second iron source is 0.5 to 4.

In the above solution, using the first iron source and the second iron source can respectively yield lithium iron phosphate with relatively small particle sizes and lithium iron phosphate with relatively large particle sizes, thereby achieving blending of lithium iron phosphate particles with different particle sizes. By setting the molar ratio value of the iron element in the first iron source to the iron element in the second iron source to 0.5 to 4, proper blending of different particle sizes can be achieved, thereby effectively improving the compaction density of the lithium iron phosphate and the energy density of the battery.

Specifically, the molar ratio value of the iron element in the first iron source to the iron element in the second iron source may be 0.5, 1, 1.5, 2.5, 3, 3.5, 4, or any numerical value within the aforementioned range.

In some embodiments, a volume average particle size Dv50 of the mixed slurry is 0.3 µm to 0.8 µm.

In the above solution, by setting the volume average particle size Dv50 of the mixed slurry to 0.3 µm to 0.8 µm, the particle size of the lithium iron phosphate can be maintained within a proper range.

Specifically, the volume average particle size Dv50 of the mixed slurry may be 0.3 µm, 0.4 µm, 0.5 µm, 0.8, or any numerical value within the aforementioned range.

In some embodiments, a molar ratio of a sum of iron elements in the first iron source and the second iron source to lithium element in the lithium source to phosphorus element in the phosphorus source is (0.9 to 1):(0.96 to 1.06):(0.95 to 1.05).

In the above solution, the iron sources include the first iron source and the second iron source. By setting the molar ratio of iron elements in the iron sources to lithium element in the lithium source to phosphorus element in the phosphorus source to (0.9 to 1):(0.96 to 1.06):(0.95 to 1.05), that is, setting the molar ratio of iron elements to lithium element to phosphorus element to the aforementioned value, losses of lithium element and phosphorus element during the preparation process can be compensated for, resulting in lithium iron phosphate with better performance.

The molar ratio of iron in the first iron source and the second iron source to lithium in the lithium source to phosphorus in the phosphorus source may be 0.9:0.96:0.95, 0.95:0.98:0.98, 1:1:1, or any numerical value within the aforementioned range.

In some embodiments, a molar ratio of lithium element in the lithium source to phosphorus element in the phosphorus source is (1.003 to 1.01): 1. By further controlling the ratio of the lithium element to the phosphorus element as described above, the degree of order of ions between Li element and Fe element in the formed lithium iron phosphate is improved, Li-Fe antisite defects in the lithium iron phosphate is effectively reduced, a lithium-ion transport path length is controlled, and a reversible capacity of the lithium iron phosphate is improved.

In some embodiments, the first iron source includes iron oxide, and the second iron source includes second iron phosphate.

The present application does not limit the combination of the first iron source and the second iron source. For example, the first iron source and the second iron source may be respectively the iron oxide and the second iron phosphate, the iron oxide and the ferrous oxalate, the first iron phosphate and the second iron phosphate, or the first iron phosphate and the ferrous oxalate. From the perspective of final experimental results, using the iron oxide and the second iron phosphate, the iron oxide and the ferrous oxalate, or the first iron phosphate and the ferrous oxalate respectively as the first iron source and the second iron source yields lithium iron phosphate with noticeably different particle sizes.

In the above solution, by configuring the first iron source to include the iron oxide and the second iron source to include the second iron phosphate with the iron-to-phosphorus ratio of 0.93 to 0.96, the iron oxide and the second iron phosphate, being readily available and widely applicable, not only enable the preparation of lithium iron phosphate with a blend of primary particles with different particle sizes, thereby improving the compaction density of the lithium iron phosphate and the energy density of the battery, but also allow for widespread industrial application.

In some embodiments, a primary particle size of the iron oxide is 0.05 µm to 0.6 µm.

Iron oxide with a primary particle size less than 0.6 µm can be referred to as small-particle-size iron oxide. Small-particle-size iron oxide easily reacts during the sintering process, yielding lithium iron phosphate with primary particles having an integrated crystal form and avoiding an increase in Li⁺ transport path due to particle agglomeration and abnormal grain growth.

In the above solution, by using the iron oxide with the primary particle size of 0.05 µm to 0.6 µm, the iron oxide easily reacts during the reaction, facilitating the formation of better lithium iron phosphate.

Specifically, the primary particle size of the iron oxide may be 0.05 µm, 0.1 µm, 0.2 µm, 0.5 µm, 0.6 µm, or any numerical value within the aforementioned range.

In some embodiments, the primary particle size of the iron oxide is 0.05 µm to 0.4 µm.

In the above solution, by using the iron oxide with the primary particle size of 0.05 µm to 0.4 µm, lithium iron phosphate particles with even better performance can be further obtained.

In some embodiments, or in one possible embodiment, a ratio value of the number of iron oxide particles with the primary particle size of 0.05 µm to 0.6 µm to the total number of iron oxide particles is greater than or equal to 0.9.

In the above solution, by ensuring that the ratio value of the number of iron oxide particles with the primary particle size of 0.05 µm to 0.6 µm to the total number of particles is not less than 90%, the production difficulty can be reduced, facilitating widespread industrial application.

In some embodiments, in an inert gas, a temperature of the mixed slurry is increased to 450°C to 600°C and maintained for 2 h to 5 h, and then the temperature is increased to 700°C to 850°C and maintained for 6 h to 15 h.

As mentioned above, when the first iron source is the iron oxide and the second iron source is the ferrous oxalate and/or the second iron phosphate, the ferrous oxalate and/or the second iron phosphate may nucleate at 450°C to 600°C and continue to grow at 700°C to 850°C to form larger lithium iron phosphate particles, and the iron oxide may nucleate and grow at 700°C to 850°C to form smaller lithium iron phosphate particles, thereby achieving blending of lithium iron phosphate particles with different particle sizes. Specifically, the ferrous oxalate and/or the second iron phosphate may nucleate successively at 450°C to 600°C and continue to grow at 700°C to 850°C to form larger lithium iron phosphate particles. The iron oxide begins to nucleate later than the ferrous oxalate and/or the second iron phosphate during the holding stage at 450°C to 600°C, but with less nucleation, then at 700°C to 850°C, nucleation of the iron oxide increases and the nuclei grow to form smaller lithium iron phosphate particles, resulting in blending of lithium iron phosphate particles with different particle sizes.

When the first iron source is the first iron phosphate and the second iron source is the ferrous oxalate and/or the second iron phosphate, the first iron phosphate, the ferrous oxalate, and the second iron phosphate may all nucleate at 450°C to 600°C. Since ferrous phosphate formed from the ferrous oxalate with the lithium source and the phosphorus source has a lower nucleation temperature, compared to the first iron phosphate, the ferrous phosphate nucleates preferentially and continues to grow within 700°C to 850°C, forming a lithium iron phosphate material with larger primary particle sizes. Since the second iron phosphate has a higher P element content compared to the first iron phosphate, it is conducive to crystal nucleus growth, so that the lithium iron phosphate crystal nuclei formed from the second iron phosphate with the lithium source and the phosphorus source grow preferentially over those formed from the first iron phosphate with the lithium source and the phosphorus source at 700°C to 850°C, thereby forming a lithium iron phosphate material with larger primary particle sizes. It can be seen that by selecting the types of the first iron source and the second iron source, a lithium iron phosphate material with a blend of primary particles with different particle sizes can be formed.

In the above solution, by employing two reaction intervals of 450°C to 600°C and 700°C to 850°C, the first iron source and the second iron source react with the phosphorus source and the iron source respectively to form lithium iron phosphate with larger and smaller primary particle sizes, thereby achieving a blend of lithium iron phosphate particles with different sizes.

In some embodiments, the method further includes: dissolve a carbon source in the solvent to jointly form the mixed slurry. The carbon source includes at least one of sucrose, glucose, dextrin, citric acid, fructose, or starch.

In the above solution, by adding a carbon material, on the one hand, the conductivity of the lithium iron phosphate can be increased, and on the other hand, the carbon material can react with iron element at a high temperature to form an Fe-C compound. This reduction reaction helps lower the reaction temperature, promote the progress of the reaction, and effectively control a crystal structure and particle morphology of a lithium iron phosphate product.

In one possible embodiment, a mass ratio value of the carbon source to the lithium iron phosphate is 0.01 to 0.1.

In the above solution, by setting the mass ratio value of the carbon source to the lithium iron phosphate to 0.01 to 0.1, the carbon source can fulfill its function without affecting the energy density of the battery.

Specifically, a mass ratio of the carbon source to the lithium iron phosphate may be 0.01, 0.05, 0.1, or any numerical value within the aforementioned range.

The carbon source used for the preparation method of the present application may be selected from those conventionally used for doping or coating carbon materials in lithium positive electrode materials. In some embodiments, the carbon source includes a small molecular carbon source and a high molecular carbon source. Optionally, the small molecular carbon source includes glucose and/or sucrose. Optionally, the high molecular carbon source includes one or more of polyethene glycol, polyacrylonitrile, or polyvinyl alcohol. The small molecular carbon source has low costs, while the high molecular carbon source has a high char yield. In some embodiments, optionally, a mass ratio of the small molecular carbon source to the high molecular carbon source is 1:1 to 5:1, thereby achieving simultaneous optimization of the cost advantage of the carbon source and the char yield advantage as much as possible.

In one possible embodiment, the method further includes: dissolve a dispersant in the solvent to jointly form the mixed slurry. The dispersant includes at least one of polyethylene glycol, polyvinyl alcohol, or polyvinylpyrrolidone.

In the above solution, by including the dispersant in the mixed slurry, the viscosity of the mixed slurry can be reduced, thereby facilitating subsequent operations.

In one possible embodiment, a mass ratio value of the dispersant to the lithium iron phosphate is 0.005 to 0.08.

In the above solution, by setting a mass ratio of the dispersant to the lithium iron phosphate to 0.005 to 0.08, the dispersant can fulfill its function without affecting the energy density of the battery.

Specifically, the mass ratio of the dispersant to the lithium iron phosphate may be 0.005, 0.01, 0.05, or any numerical value within the aforementioned range.

In some embodiments, the method further includes: dissolve an additive in the solvent to jointly form the mixed slurry. The additive includes a compound containing at least one element selected from Ti, Ga, Sr, W, Mg, Si, Y, Zr, B, Mo, or La.

In the above solution, by including the additive in the mixed slurry, the additive enters a crystal lattice, which can increase the diffusion rate of lithium ions, thereby improving ionic conductivity and rate performance.

In some embodiments, a mass ratio value of the additive to the lithium iron phosphate is 0.0001 to 0.0005.

In the above solution, by setting the mass ratio value of the additive to the lithium iron phosphate to 0.0001 to 0.0005, the additive can fulfill its function without affecting the energy density of the battery.

Specifically, a mass ratio of the additive to the lithium iron phosphate may be 0.0001, 0.0002, 0.0005, or any numerical value within the aforementioned range.

In some embodiments, the aforementioned additive includes a substance containing at least one element selected from Al, Na, K, Mg, Cu, Mn, Cr, Zn, Pb, Ca, Co, Ni, Sr, Nb, Ti, V, B, S, Si, N, F, Cl, or Br. The aforementioned additives are doped into the lithium iron phosphate at lithium sites, iron sites, phosphorus sites, and oxygen sites, forming doped lithium iron phosphate, which may be referred to as a phosphate-based positive electrode material. Taking the phosphate-based positive electrode material with a molecular formula of LiₘAₐFeₓD_{d}P_{y}EₑO_{z}G_{g} to be synthesized as an example, A is a lithium-site doping element, and element A includes at least one element selected from Al, Na, K, or Mg provided by the aforementioned additives; D is an iron-site doping element, and element D includes at least one element selected from Cu, Mn, Cr, Zn, Pb, Ca, Co, Ni, Sr, Nb, Ti, or V provided by the aforementioned additives; E is a phosphorus-site doping element, and element E includes at least one element selected from B, S, Si, or N provided by the aforementioned additives; G is an oxygen-site doping element, and element G includes at least one element selected from S, F, Cl, or Br provided by the aforementioned additives. Each additive may be a salt or hydroxide containing a respective element, such as carbonate, sulfate, and nitrate. In some embodiments, m is selected from a range of 0.5 to 1.15 (for example, 0.5, 0.6, 0.7, 0.8, 0.9, 1.0, or 1.1); a is selected from a range of 0 to 0.1 (for example, 0, 0.01, 0.02, 0.03, 0.04, 0.05, 0.06, 0.07, 0.08, 0.09, or 0.1); x is selected from a range of 0.5 to 1 (for example, 0.5, 0.6, 0.7, 0.8, 0.9, or 1); d is selected from a range of 0 to 0.5 (for example, 0, 0.1, 0.2, 0.3, 0.4, or 0.5); y is selected from a range of 0.5 to 1 (for example, 0.5, 0.6, 0.7, 0.8, 0.9, or 1); e is selected from a range of 0 to 0.5 (for example, 0, 0.1, 0.2, 0.3, 0.4, or 0.5); z is selected from a range of 3.5 to 4 (for example, 3.5, 3.6, 3.7, 3.8, 3.9, or 4.0); and g is selected from a range of 0 to 0.5 (for example, 0, 0.1, 0.2, 0.3, 0.4, or 0.5).

In some embodiments, the lithium source includes at least one of lithium dihydrogen phosphate, lithium carbonate, lithium hydroxide, lithium phosphate, lithium acetate, or lithium oxalate.

In some embodiments, the phosphorus source includes at least one of phosphoric acid, ammonium dihydrogen phosphate, diammonium hydrogen phosphate, or lithium dihydrogen phosphate.

### [Positive Electrode Active Material]

According to a second aspect, the present application provides a positive electrode active material. The positive electrode active material includes lithium iron phosphate prepared by the method for preparing lithium iron phosphate according to any embodiment in the first aspect of the present application.

In some embodiments, a compaction density of the lithium iron phosphate under 3 T is greater than or equal to 2.5 g/cm³, optionally ranges from 2.5 g/cm³ to 2.65 g/cm³, and further optionally ranges from 2.55 g/cm³ to 2.65 g/cm³. The description "3 T" herein is a common description in the field, which converts to a standard pressure of 226.0738 MPa.

In the above solution, the lithium iron phosphate with a blend of different particle sizes prepared by the preparation method of the present application has a compaction density of not less than 2.5 g/cm³, which helps improve the capacity of the battery.

Specifically, the compaction density of the lithium iron phosphate may be 2.5 g/cm³, 2.52 g/cm³, 2.55 g/cm³, 2.58 g/cm³, 2.60 g/cm³, 2.65 g/cm³, or any numerical value within the aforementioned range.

Unless otherwise specified, the compaction density in the present application refers to the compaction density of lithium iron phosphate under a pressure of 3 T.

In some embodiments, a volume average particle size Dv50 of the lithium iron phosphate is 0.6 µm to 2 µm.

Specifically, the volume average particle size Dv50 of the lithium iron phosphate may be 0.6 µm, 0.8 µm, 1 µm, 1.5 µm, or any numerical value within the aforementioned range.

In some embodiments, the volume average particle size Dv50 of the lithium iron phosphate is 0.6 µm to 1.8 µm.

In some embodiments, the lithium iron phosphate has a carbon coating layer.

In some embodiments, in an FTIR spectrogram of the lithium iron phosphate, a characteristic absorption peak position of PO₄³⁻ is ≤ 995 cm⁻¹, and optionally the characteristic absorption peak position of PO₄³⁻ is ≤ 984 cm⁻¹. The lithium iron phosphate having the aforementioned characteristic absorption peak position of PO₄³⁻ has a lower degree of Li-Fe antisite defects and a more regular crystal lattice, and therefore the material has a higher reversible capacity. Further optionally, the characteristic absorption peak position of PO₄³⁻ is ≤ 982.5 cm⁻¹.

The present application further provides a phosphate-based positive electrode material. In an FTIR spectrogram of the phosphate-based positive electrode material, a characteristic absorption peak position of PO₄³⁻ is ≤ 995 cm⁻¹, and a powder compaction density of the phosphate-based positive electrode material under 226.0738 MPa is 2.5 g/cm³ or above. The phosphate-based positive electrode material described above has a more regular crystal lattice, which enables a cell to achieve better reversible capacity, and it possesses a higher powder compaction density, thereby enabling the cell to have higher reversible capacity and kinetic performance.

In some embodiments, the powder compaction density of the phosphate-based positive electrode material under 226.0738 MPa ranges from 2.5 g/cm³ to 2.65 g/cm³, and optionally ranges from 2.55 g/cm³ to 2.65 g/cm³.

In some embodiments, in the FTIR spectrogram of the phosphate-based positive electrode material, the characteristic absorption peak position of PO₄³⁻ is ≤ 984 cm⁻¹, and optionally the characteristic absorption peak position of PO₄³⁻ is ≤ 982.5 cm⁻¹. The smaller the characteristic absorption peak position of PO₄³⁻, the closer to the characteristic absorption peak of PO₄³⁻ in defect-free LiFePO₄, which indicates a more regular crystal lattice structure of the phosphate positive electrode material.

In some embodiments, the phosphate-based positive electrode material includes at least one of lithium iron phosphate, a doping modified substance thereof, and/or a coating modified substance thereof; optionally, the phosphate-based positive electrode material includes a material having a molecular formula of LiₘAₐFeₓDₐP_{y}EₑO_{z}Gg, where A includes at least one element selected from Al, Na, K, or Mg; D includes at least one element selected from Cu, Mn, Cr, Zn, Pb, Ca, Co, Ni, Sr, Nb, Ti, or V; E includes at least one element selected from B, S, Si, or N; G includes at least one element selected from S, F, Cl, or Br; m is selected from a range of 0.5 to 1.15; a is selected from a range of 0 to 0.1; x is selected from a range of 0.5 to 1; d is selected from a range of 0 to 0.5; y is selected from a range of 0.5 to 1; e is selected from a range of 0 to 0.5; z is selected from a range of 3.5 to 4; and g is selected from a range of 0 to 0.5. For the above phosphate-based positive electrode material formed through element doping, the doping elements enter the crystal lattice, which can increase the diffusion rate of lithium ions, thereby improving ionic conductivity and rate performance.

In some embodiments, the phosphate-based positive electrode material further includes carbon. Optionally, a mass content of the carbon in the phosphate-based positive electrode material satisfies 1.00% ≤ Wc ≤ 1.90%, and/or optionally, a powder resistivity of the phosphate-based positive electrode material under 8 MPa satisfies S ≤ 90 Ω·cm. Further optionally, the mass content of the carbon in the phosphate-based positive electrode material satisfies 1.20% ≤ Wc ≤ 1.80%, and/or the powder resistivity of the phosphate-based positive electrode material under 8 MPa satisfies S ≤ 60 Ω·cm. The conductivity of the phosphate-based positive electrode material is improved.

In some embodiments, the positive electrode active material may further include Liₓ(NiₐCo_{b}Mn_{c})_{1-d}M_{d}O_{2-y}A_{y}, where M includes at least one of Zr, Al, B, Ta, Mo, W, Nb, Sb, or La, A includes at least one of S, N, P, F, Cl, Br, or I, 0.2 < x ≤ 1.2, 0.5 ≤ a < 1.0, 0 ≤ b < 0.5, 0 ≤ c < 1, 0 ≤ d < 1, and 0 ≤ y < 0.02.

It should be noted here that the positive electrode active material includes, but is not limited to, the following substances: Li_{0.5}Ni_{0.5}Co_{0.1}Mn_{0.4}O₂, Li_{0.5}(Ni_{0.5}Co_{0.1}Mn_{0.4})_{0.5}Zr_{0.5}O_{1.9}S_{0.1}, and LiNi_{0.4}Co_{0.3}Mn_{0.3}O₂.

It should be noted that in the positive electrode plate, battery or power-consuming device, lithium ions will be consumed as the battery undergoes processes such as formation and cycling, so the measured lithium element content in the positive electrode active material may be less than 1. At the same time, if the positive electrode plate is supplemented with lithium, after the battery undergoes processes such as formation and cycling, the measured lithium element content in the positive electrode material may be greater than 1.

Similarly, in the enumeration of the positive electrode active material in the present application, in some embodiments, the positive electrode active material may further include positive electrode active materials used for batteries well known in the art. As an example, the positive electrode active material may further include at least one of the following materials: lithium-containing phosphate with an olivine structure, lithium transition metal oxide, and respective modified compounds thereof. However, the present application is not limited to these materials, and other conventional materials used as positive electrode active materials for batteries may also be included. These positive electrode active materials may be used in a manner that two or more thereof are combined. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811)), lithium nickel cobalt aluminum oxide (such as LiNi_{0.8}Co_{0.15}Al_{0.05}O₂), and modified compounds thereof. Examples of the lithium-containing phosphate with an olivine structure may include, but are not limited to, at least one of a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon.

### [Positive Electrode Plate]

According to a third aspect, the present application provides a positive electrode plate. FIG. 2 is a schematic structural diagram of a positive electrode plate according to an embodiment of the present application. As shown in FIG. 2, a positive electrode plate 121 includes a positive electrode current collector 122 and a positive electrode film layer 123 disposed on at least one side of the positive electrode current collector 122. The positive electrode film layer 123 includes lithium iron phosphate prepared by the preparation method for lithium iron phosphate according to any embodiment in the first aspect, or the positive electrode active material according to the second aspect, or the phosphate-based positive electrode material according to the third aspect.

Generally, a battery cell includes the positive electrode plate 121, a separator, a negative electrode plate, and an electrolyte solution. During charging and discharging of a battery, active ions are intercalated and deintercalated back and forth between a positive electrode and a negative electrode. Electrolyte plays a role of transferring ions between the positive electrode and the negative electrode. The separator is arranged between the positive electrode and the negative electrode, and mainly plays a role of preventing a short circuit between the positive electrode and the negative electrode while allowing the ions to pass through.

It should be noted here that the "positive electrode plate" and the "negative electrode plate" mentioned in the examples of the present application refer to the entirety of the positive electrode plate and the negative electrode plate including an active material, a current collector, or another additive.

The positive electrode plate 121 includes the positive electrode current collector 122 and the positive electrode film layer 123 disposed on at least one surface of the positive electrode current collector 122. The positive electrode film layer 123 includes lithium iron phosphate.

As an example, the positive electrode current collector 122 has two opposite surfaces in a thickness direction of the positive electrode current collector, and the positive electrode film layer 123 is disposed on either or both of the two opposite surfaces of the positive electrode current collector 122.

In some embodiments, the positive electrode film layer satisfies one or more of the following conditions: 1) a quantity content of the phosphate-based positive electrode material with a particle size in a range of 50 nm to 200 nm is 40% to 80%, optionally 50% to 70%, and further optionally 45% to 57%; and 2) a cross-sectional area percentage content of the phosphate-based positive electrode material with a particle size of not less than 1500 nm is 30% to 80%, optionally 40% to 75%, and further optionally 40% to 70%. The small-particle phosphate-based positive electrode material in the positive electrode film layer has an appropriate quantity proportion, while the large-particle phosphate-based positive electrode material has an appropriate cross-sectional area proportion. The specific gradation of particles with different particle sizes improves the compaction density of the positive electrode plate, further improving the energy density of the battery.

The aforementioned particle size-related characteristics are tested using the following method:

An electrode plate is cut perpendicular to a surface of the positive electrode plate having the positive electrode film layer using an argon ion beam to expose a cross-section. The cross-section is photographed using a scanning electron microscope. Particle sizes of the active material are statistically analyzed using a length-diameter statistical method.

Here, the average particle size *x̅* is the total particle size value divided by the total quantity of particles.

Since particles with 0<*xᵢ*≤50 nm are prone to agglomeration, leading to significant statistical errors and difficulty in clear individual identification, particles with a particle size of 0<*xᵢ*≤50 nm are excluded from the statistical analysis during particle size statistics process.

The quantity content of the phosphate-based positive electrode material with a particle size in a range of 50 nm to 200 nm is calculated by dividing the quantity of phosphate-based positive electrode material with the particle size being within the range of 50 nm to 200 nm in the cross-section by the total quantity of phosphate-based positive electrode material.

The cross-sectional area percentage content of the phosphate-based positive electrode material with a particle size of not less than 1500 nm is calculated by dividing the cross-sectional area of the phosphate-based positive electrode material with the particle size not less than 1500 nm in the cross-section by the total area of the phosphate-based positive electrode material.

The area of the active material is obtained through statistical analysis of the acquired scanning electron microscope images of the cross-section of the positive electrode plate using Avizo 3D software.

In some embodiments, the positive electrode current collector 122 may be a metal foil or a composite current collector. For example, an aluminum foil may be used as the metal foil. The composite current collector may include a polymer material substrate layer and a metal layer formed on at least one surface of the polymer material substrate layer. The composite current collector may be formed by forming a metal material (aluminum, aluminum alloy, nickel, nickel alloy, titanium, titanium alloy, silver, silver alloy, and the like) on a polymer material substrate (such as a substrate of polypropylene (PP), polyethylene terephthalate (PET), polybutylene terephthalate (PBT), polystyrene (PS), and polyethylene (PE)).

In some embodiments, the positive electrode film layer 123 further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylic resin.

In some embodiments, the positive electrode film layer 123 further optionally includes a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate 121 may be prepared through the following method: disperse the foregoing components for preparing the positive electrode plate, for example, the positive electrode active material, the conductive agent, the binder, and any other components, in a solvent (for example, N-methylpyrrolidone) to form a positive electrode slurry; and coat the positive electrode current collector 122 with the positive electrode slurry, and perform working procedures such as drying and cold pressing to obtain the positive electrode plate 121.

### [Negative Electrode Plate]

The negative electrode plate includes a negative electrode current collector and a negative electrode film layer disposed on at least one surface of the negative electrode current collector. The negative electrode film layer includes a negative electrode active material.

As an example, the negative electrode current collector has two opposite surfaces in a thickness direction of the negative electrode current collector, and the negative electrode film layer is disposed on either or both of the two opposite surfaces of the negative electrode current collector.

In some embodiments, the negative electrode current collector may be a metal foil or a composite current collector. For example, a copper foil may be used as the metal foil. The composite current collector may include a polymer material substrate layer and a metal layer formed on at least one surface of a polymer material substrate. The composite current collector may be formed by forming a metal material (copper, copper alloy, nickel, nickel alloy, titanium, titanium alloy, silver, silver alloy, and the like) on the polymer material substrate (such as a substrate of polypropylene (PP), polyethylene terephthalate (PET), polybutylene terephthalate (PBT), polystyrene (PS), and polyethylene (PE)).

In some embodiments, the negative electrode active material may use negative electrode active materials used for batteries well known in the art. As an example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, a silicon-oxygen compound, a silicon-carbon composite, a silicon-nitrogen composite, and silicon alloy. The tin-based material may be at least one selected from elemental tin, a tin-oxide compound, and tin alloy. However, the present application is not limited to these materials, and other conventional materials used as negative electrode active materials for batteries may also be used. Only one or a combination of two or more of these negative electrode active materials may be used.

In some embodiments, the negative electrode film layer further optionally includes a binder. The binder may be at least one selected from styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be at least one selected from superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate may be prepared through the following method: disperse the foregoing components for preparing the negative electrode plate, for example, the negative electrode active material, the conductive agent, the binder, and any other components, in a solvent (for example, deionized water) to form a negative electrode slurry; and coat the negative electrode current collector with the negative electrode slurry, and perform working procedures such as drying and cold pressing to obtain the negative electrode plate.

### [Electrolyte]

The electrolyte plays a role of conducting ions between the positive electrode plate 121 and the negative electrode plate. The type of the electrolyte is not specifically limited in the present application, and it may be selected according to demands. For example, the electrolyte may be in a liquid state, a gel state, or an all-solid state.

In some embodiments, the electrolyte uses an electrolyte solution. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes an electrolyte solution additive. For example, the electrolyte solution additive may include a negative electrode film-forming additive and a positive electrode film-forming additive, and may further include additives that can improve particular performance of the battery, for example, an additive that improves the overcharging performance of the battery, an additive that improves high-temperature or low-temperature performance of the battery, and the like.

### [Separator]

In some embodiments, the battery cell further includes a separator. The type of the separator is not particularly limited in the present application, and any well-known separator of a porous structure having good chemical stability and mechanical stability may be selected.

In some embodiments, a material of the separator may be at least one selected from glass fiber, non-woven fabric, polyethylene, polypropylene, and polyvinylidene fluoride. The separator may be a single-layer film or a multilayer composite film, which is not specially limited. In a case that the separator is a multilayer composite film, materials of layers may be the same or different, which is not specially limited.

In some embodiments, the positive electrode plate 121, the negative electrode plate, and the separator may be made into an electrode assembly through a winding process or a laminating process.

In some embodiments, the battery cell may include an outer packaging. The outer packaging may be used for encapsulating the above electrode assembly and electrolyte.

In some embodiments, the outer packaging of the battery cell may be a hard shell, for example, a hard plastic case, an aluminum shell, or a steel shell. The outer packaging of the battery cell may also be a soft packaging, for example, a bag-type soft packaging. A material of the soft packaging may be plastic, and examples of plastic may include polypropylene, polybutylene terephthalate, polybutylene succinate, and the like.

A shape of the battery cell is not specially limited in the present application, and may be a in cylinder shape, a square shape, or any other shape. For example, FIG. 3 is a schematic diagram of a battery cell according to an embodiment of the present application.

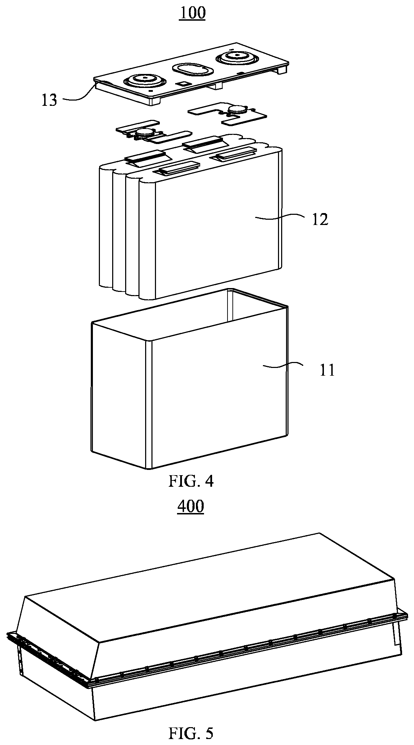

FIG. 4 is a schematic structural diagram of a battery cell according to an embodiment of the present application. As shown in FIG. 4, an outer packaging of a battery cell 100 includes a case 11 and a cover plate 13. The case 11 may include a bottom plate and side plates connected to the bottom plate, and the bottom plate and the side plates are enclosed to form an accommodating cavity. The case 11 is provided with an opening in communication with the accommodating cavity, and the cover plate 13 may cover the opening to close the accommodating cavity. The positive electrode plate 121 and the negative electrode plate may be formed into an electrode assembly 12 through a winding process or a laminating process. The electrode assembly 12 is encapsulated in the accommodating cavity. The electrode assembly 12 is impregnated with the electrolyte solution. One or more electrode assemblies 12 may be contained in the battery cell 100, and may be selected by those skilled in the art according to specific actual demands.

In some embodiments, the battery cell 100 may also be assembled into a battery module. One or more battery cells 100 may be contained in the battery module, and the specific number may be selected by those skilled in the art according to the application and capacity of the battery module.

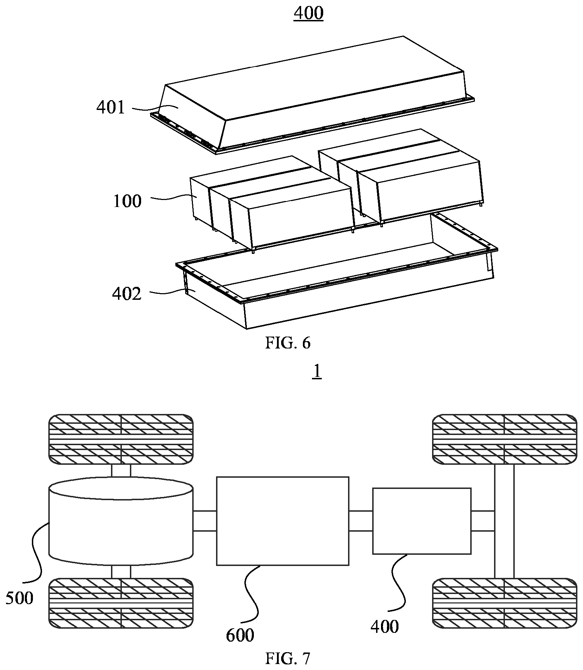

FIG. 5 is a schematic diagram of a battery according to an embodiment of the present application. FIG. 6 is a schematic structural diagram of a battery according to an embodiment of the present application. Referring to FIG. 5 and FIG. 6, a battery 400 may include a battery box and multiple battery cells 100 arranged in the battery box. The battery box includes an upper box 401 and a lower box 402. The upper box 401 can cover the lower box 402 to form a closed space for accommodating the battery cells 100. The multiple battery cells 100 may be arranged in the battery box in any manner.

In addition, the present application further provides a power-consuming device. The power-consuming device includes at least one of the positive electrode plate 121, the battery cell 100, or the battery 400 provided in the present application. The positive electrode plate 121, the battery cell 100, or the battery 400 may be used as a power source of the power-consuming device, or may also be used as an energy storage unit of the power-consuming device. The power-consuming device may include, but is not limited to, a mobile device (for example, a mobile phone or a notebook computer), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

For example, FIG. 7 is a schematic structural diagram of a power-consuming device according to an embodiment of the present application. As shown in FIG. 7, when a power-consuming device 1 is a vehicle 1, the vehicle 1 may be a fuel vehicle, a gas vehicle, or a new energy vehicle. The new energy vehicle may be an all-electric vehicle, a hybrid electric vehicle, an extended-range electric vehicle, or the like. A motor 500, a controller 600 and a battery 400 may be arranged inside the vehicle 1. The controller 600 is configured to control the battery 400 to supply power to the motor 500. For example, the battery 400 may be arranged on the bottom, in the front, or in the rear of the vehicle 1. The battery 400 may be configured to supply power to the vehicle 1. For example, the battery 400 may be used as an operating power source of the vehicle 1 and used for a circuit system of the vehicle 1, for example, for operating electricity requirements during starting, navigation, and operation of the vehicle 1. In another example of the present application, the battery 400 may be used not only as the operating power source of the vehicle 1, but also as a driving power source of the vehicle 1, to fully or partially replace fuel or natural gas to provide driving power for the vehicle 1.

The positive electrode plate 121, the battery cell 100, or the battery 400 may be selected according to use requirements of the power-consuming device.

The power-consuming device is an all-electric vehicle, a hybrid electric vehicle, or a plug-in hybrid electric vehicle. To meet the high-capacity demand of the power-consuming device for the battery, the battery cell 100 or the battery 400 may be employed.

As another example, the device may be a mobile phone, a tablet computer, a notebook computer, and the like. The device is generally required to be light and thin, and the battery cell 100 may be used as a power source.

### [Examples]

Examples of the present application will be described below. The examples described below are exemplary and only intended to explain the present application, and cannot be construed as limitations on the present application. If no specific techniques or conditions are specified in the examples, the techniques or conditions described in the literatures in the art or in accordance with the product specification shall be followed. The reagents or instruments used without manufacturer indicated are all commercially available conventional products.

### [Example 1]

### 1) Preparation of lithium-ion battery

1.11) Preparation of lithium iron phosphate: iron oxide, second iron phosphate, lithium dihydrogen phosphate, lithium carbonate, titanium dioxide, glucose, and polyethylene glycol were mixed in 10 Kg of pure water according to a mass ratio of 1.00 Kg:1.26 Kg:1.34 Kg:0.319 Kg:0.0049 Kg:0.28 Kg:0.07 Kg. The mixture was ground using a sand mill to obtain a mixed slurry with a volume average particle size Dv50 of 0.45 µm. The mixed slurry was spraydried (a specific spray-drying process was as follows: inlet temperature was maintained at 260°C, outlet temperature was 90°C, and feed rate was 15 Hz). The dried product was then heated to 550°C at a rate of 3°C/min, held for 3 h, further heated to 780°C at a rate of 4°C/min, held for 10 h, and allowed to cool with the furnace. Finally, the resulting product was subjected to jet milling to obtain lithium iron phosphate powder. A primary particle size of a first iron source, iron oxide, was 0.2 µm, an iron-to-phosphorus ratio of the second iron phosphate in a second iron source was 0.95, the volume average particle size Dv50 of the mixed slurry was 0.45 µm, and a molar ratio value of iron element in the first iron source to iron element in the second iron source was 1.5.

1.12) Preparation of positive electrode plate: the lithium iron phosphate powder prepared in Example 1, a conductive agent carbon nanotube (CNT), and a positive electrode binder polyvinylidene fluoride (PVDF) were dissolved in a solvent, N-methylpyrrolidone (NMP), according to a weight ratio of 96%:2%:2%. After thorough stirring and uniform mixing, a positive electrode slurry was prepared. The positive electrode slurry was coated onto an Al foil, and then subjected to drying, cold pressing, and slitting to obtain a positive electrode plate.

1.2) Preparation of negative electrode plate: a negative electrode active material artificial graphite, a conductive agent acetylene black, a negative electrode binder styrene-butadiene rubber (SBR), and a thickener sodium carboxymethyl cellulose (CMC-Na) were thoroughly stirred and uniformly mixed in an appropriate amount of deionized water solvent system according to a weight ratio of 96.5%:0.7%:1.8%:1% to obtain a negative electrode slurry. The negative electrode slurry was coated onto a Cu foil, and then subjected to drying, cold pressing, and slitting to obtain a negative electrode plate.

1.3) Preparation of separator: a PE porous polymer film was used as a separator.

1.4) Electrolyte solution: EC, EMC, and DMC were dissolved in 1M LiPF₆ according to a volume ratio of 1:1:1, and then subjected to thorough stirring to obtain a 1 mol/L LiPF₆ electrolyte solution.

1.5) Assembly: the positive electrode plate, the separator, and the negative electrode plate were laminated in order, where the separator was positioned between a positive electrode and a negative electrode for separation, then wound to form an electrode assembly, and then the electrolyte solution was added. A lithium-ion battery was then obtained after undergoing processes such as formation and standing.

### [Example 2]

The preparation process of the lithium-ion battery of Example 2 was substantially the same as that of Example 1, with the differences being that the second iron source in Example 2 was ferrous oxalate; iron oxide, ferrous oxalate, lithium dihydrogen phosphate, titanium dioxide, glucose, and polyethylene glycol were mixed in 12 kg of pure water according to a mass ratio of 1.11 Kg:1.00 Kg:3.01 Kg:0.0049 Kg:0.28 Kg:0.07 Kg; and the molar ratio value of iron element in the first iron source to iron element in the second iron source was 2.

### [Example 3]

The preparation process of the lithium-ion battery of Example 3 was substantially the same as that of Example 1, with the differences being that the first iron source in Example 3 was first iron phosphate; an iron-to-phosphorus ratio of the first iron phosphate was 0.975; a mass ratio of first iron phosphate, second iron phosphate, lithium carbonate, titanium dioxide, glucose, and polyethylene glycol was 1.89 Kg:1.26 Kg:0.798 Kg:0.0049 Kg:0.28 Kg:0.07 Kg; and the molar ratio value of iron element in the first iron source to iron element in the second iron source was 1.5.

### [Example 4]

The preparation process of the lithium-ion battery of Example 4 was substantially the same as that of Example 3, with the differences being that the second iron source in Example 4 was ferrous oxalate; first iron phosphate, ferrous oxalate, lithium dihydrogen phosphate, lithium carbonate, titanium dioxide, glucose, and polyethylene glycol were mixed in 11 Kg of pure water according to a mass ratio of 1.89 Kg:1.20 Kg:0.895 Kg:0.479 Kg:0.0049 Kg:0.28 Kg:0.07 Kg; and the molar ratio value of iron element in the first iron source to iron element in the second iron source was 1.5.

### [Example 5]

The preparation process of the lithium-ion battery of Example 5 was substantially the same as that of Example 1, with the difference being that, in Example 5, the iron-to-phosphorus ratio of the second iron phosphate serving as the second iron source was 0.93.

### [Example 6]

The preparation process of the lithium-ion battery of Example 6 was substantially the same as that of Example 1, with the difference being that, in Example 6, the iron-to-phosphorus ratio of the second iron phosphate serving as the second iron source was 0.94.

### [Example 7]

The preparation process of the lithium-ion battery of Example 7 was substantially the same as that of Example 1, with the difference being that, in Example 7, the iron-to-phosphorus ratio of the second iron phosphate serving as the second iron source was 0.96.

### [Example 8]

The preparation process of the lithium-ion battery of Example 8 was substantially the same as that of Example 1, with the difference being that, in Example 8, the primary particle size of the first iron source, iron oxide, was 0.4 µm.

### [Example 9]

The preparation process of the lithium-ion battery of Example 9 was substantially the same as that of Example 1, with the difference being that, in Example 9, the primary particle size of the first iron source, iron oxide, was 0.6 µm.

### [Example 10]

The preparation process of the lithium-ion battery of Example 10 was substantially the same as that of Example 1, with the difference being that, in Example 10, the primary particle size of the first iron source, iron oxide, was 1 µm.

### [Example 11]

The preparation process of the lithium-ion battery of Example 11 was substantially the same as that of Example 1, with the differences being that, in Example 11, a mass ratio of iron oxide, second iron phosphate, lithium dihydrogen phosphate, lithium carbonate, titanium dioxide, glucose, and polyethylene glycol was 1.33 Kg:0.629 Kg:1.79 Kg:0.160 Kg:0.0049 Kg:0.28 Kg:0.07 Kg, and a mass ratio value of iron element in the first iron source to iron element in the second iron source was 4.

### [Example 12]

The preparation process of the lithium-ion battery of Example 12 was substantially the same as that of Example 1, with the differences being that, in Example 12, a mass ratio of iron oxide, second iron phosphate, lithium dihydrogen phosphate, lithium carbonate, titanium dioxide, glucose, and polyethylene glycol was 0.556 Kg:2.10 Kg:0.746 Kg:0.533 Kg:0.0049 Kg:0.28 Kg:0.07 Kg, and the mass ratio value of iron element in the first iron source to iron element in the second iron source was 0.5.

### [Example 13]

The preparation process of the lithium-ion battery of Example 13 was substantially the same as that of Example 1, with the differences being that, in Example 13, a mass ratio of iron oxide, second iron phosphate, lithium dihydrogen phosphate, lithium carbonate, titanium dioxide, glucose, and polyethylene glycol was 0.741 Kg:1.75 Kg:0.994 Kg:0.444 Kg:0.0049 Kg:0.28 Kg:0.07 Kg, and the molar ratio value of iron element in the first iron source to iron element in the second iron source was 0.8.

### [Example 14]

The preparation process of the lithium-ion battery of Example 14 was substantially the same as that of Example 1, with the differences being that, in Example 14, a mass ratio of iron oxide, second iron phosphate, lithium dihydrogen phosphate, lithium carbonate, titanium dioxide, glucose, and polyethylene glycol was 1.19 Kg:0.899 Kg:1.60 Kg:0.228 Kg:0.0049 Kg:0.28 Kg:0.07 Kg, and the molar ratio value of iron element in the first iron source to iron element in the second iron source was 2.5.

### [Example 15]

The preparation process of the lithium-ion battery of Example 15 was substantially the same as that of Example 1, with the differences being that, in Example 15, a mass ratio of iron oxide, second iron phosphate, lithium dihydrogen phosphate, lithium carbonate, titanium dioxide, glucose, and polyethylene glycol was 0.334 Kg:2.52 Kg:0.448 Kg:0.639 Kg:0.0049 Kg:0.28 Kg:0.07 Kg, and the molar ratio value of iron element in the first iron source to iron element in the second iron source was 0.26.

### [Example 16]

The preparation process of the lithium-ion battery of Example 16 was substantially the same as that of Example 1, with the differences being that, in Example 16, a mass ratio of iron oxide, second iron phosphate, lithium dihydrogen phosphate, lithium carbonate, titanium dioxide, glucose, and polyethylene glycol was 1.48 Kg:0.350 Kg:1.99 Kg: 0.089 Kg:0.0049 Kg:0.28 Kg:0.07 Kg, and the molar ratio value of iron element in the first iron source to iron element in the second iron source was 8.

### [Example 17]

The preparation process of the lithium-ion battery of Example 17 was substantially the same as that of Example 1, with the difference being that, in Example 17, the volume average particle size Dv50 of the mixed slurry was 0.3 µm.

### [Example 18]

The preparation process of the lithium-ion battery of Example 18 was substantially the same as that of Example 1, with the difference being that, in Example 18, the volume average particle size Dv50 of the mixed slurry was 0.8 µm.

### [Example 19]

The preparation process of the lithium-ion battery of Example 19 was substantially the same as that of Example 1, with the difference being that, in Example 19, the volume average particle size Dv50 of the mixed slurry was 0.2 µm.

### [Example 20]

The preparation process of the lithium-ion battery of Example 20 was substantially the same as that of Example 1, with the difference being that, in Example 20, the volume average particle size Dv50 of the mixed slurry was 1 µm.

### [Example 21]

The preparation process of the lithium-ion battery of Example 21 was substantially the same as that of Example 1, with the difference being that, in Example 21, the iron-to-phosphorus ratio of the first iron phosphate serving as the first iron source was 0.985.

### [Example 22]

The preparation process of the lithium-ion battery of Example 22 was substantially the same as that of Example 1, with the difference being that, in Example 22, the iron-to-phosphorus ratio of the first iron phosphate serving as the first iron source was 0.97.

### [Example 23]

The preparation process of the lithium-ion battery of Example 23 was substantially the same as that of Example 1, with the difference being that, in Example 23, the primary particle size of the first iron source, iron oxide, was 0.05 µm.

### [Example 24]

The preparation process of the lithium-ion battery of Example 24 was substantially the same as that of Example 1, with the difference being that, in Example 24, the primary particle size of the first iron source, iron oxide, was 0.1 µm.

### [Example 25]

The preparation process of the lithium-ion battery of Example 25 was substantially the same as that of Example 1, with the differences being that, in Example 25, the first iron source was first iron phosphate; the iron-to-phosphorus ratio of the first iron phosphate was 0.97; the second iron source was second iron phosphate; the iron-to-phosphorus ratio of the second iron phosphate was 0.955; and a molar ratio of lithium, iron, and phosphorus in the first iron phosphate, the second iron phosphate, and lithium carbonate was 1.004:0.959:1.

### [Example 26]

The preparation process of the lithium-ion battery of Example 26 was substantially the same as that of Example 1, with the differences being that, in Example 26, the first iron source was first iron phosphate; the iron-to-phosphorus ratio of the first iron phosphate was 0.98; the second iron source was second iron phosphate; the iron-to-phosphorus ratio of the second iron phosphate was 0.955; and the molar ratio of lithium, iron, and phosphorus in the first iron phosphate, the second iron phosphate, and lithium carbonate was 1.005:0.963:1.

### [Example 27]

The preparation process of the lithium-ion battery of Example 27 was substantially the same as that of Example 1, with the differences being that, in Example 27, the first iron source was first iron phosphate; the iron-to-phosphorus ratio of the first iron phosphate was 0.975; the second iron source was second iron phosphate; the iron-to-phosphorus ratio of the second iron phosphate was 0.945; and the molar ratio of lithium, iron, and phosphorus in the first iron phosphate, the second iron phosphate, and lithium carbonate was 1.003:0.954:1.

### [Example 28]

The preparation process of the lithium-ion battery of Example 28 was substantially the same as that of Example 1, with the differences being that, in Example 28, the first iron source was first iron phosphate; the iron-to-phosphorus ratio of the first iron phosphate was 0.975; the second iron source was second iron phosphate; the iron-to-phosphorus ratio of the second iron phosphate was 0.945; and the molar ratio of lithium, iron, and phosphorus in the first iron phosphate, the second iron phosphate, and lithium carbonate was 1.01:0.965:1.

### [Example 29]

The preparation process of the lithium-ion battery of Example 29 was substantially the same as that of Example 1, with the difference being that, after spray-drying in Example 29, the temperature was increased to 450°C at a rate of 3°C/min and maintained for 5 h, then further increased to 850°C at a rate of 4°C/min and maintained for 6 h, followed by cooling with the furnace, and the resulting material was then subjected to jet milling to obtain lithium iron phosphate powder.

### [Example 30]

The preparation process of the lithium-ion battery of Example 30 was substantially the same as that of Example 1, with the difference being that, after spray-drying in Example 30, the temperature was increased to 600°C at a rate of 3°C/min and maintained for 2 h, then further increased to 700°C at a rate of 4°C/min and maintained for 15 h, followed by cooling with the furnace, and the resulting product was then subjected to jet milling to obtain lithium iron phosphate powder.

### [Example 31]

The preparation process of the lithium-ion battery of Example 31 was substantially the same as that of Example 1, with the difference being that, after spray-drying in Example 31, the temperature was increased to 650°C at a rate of 3°C/min and maintained for 2 h, then further increased to 750°C at a rate of 4°C/min and maintained for 10 h, followed by cooling with the furnace, and the resulting product was then subjected to jet milling to obtain lithium iron phosphate powder.

### [Comparative Example 1]

The preparation process of the lithium-ion battery of Comparative Example 1 was substantially the same as that of Example 1, with the differences being that, in Comparative Example 1, no second iron source was used, and iron oxide, lithium dihydrogen phosphate, titanium dioxide, glucose, and polyethylene glycol were mixed in 10 Kg of pure water according to a mass ratio of 1.67 Kg:2.24 Kg:0.0049 Kg:0.28 Kg:0.07 Kg.

### [Comparative Example 2]

The preparation process of the lithium-ion battery of Comparative Example 2 was substantially the same as that of Example 1, with the difference being that, in Comparative Example 2, the second iron source was first iron phosphate with an iron-to-phosphorus ratio of 0.985.

### [Comparative Example 3]

The preparation process of the lithium-ion battery of Comparative Example 3 was substantially the same as that of Example 2, with the differences being that, in Comparative Example 3, no first iron source was used, and ferrous oxalate, lithium dihydrogen phosphate, titanium dioxide, glucose, and polyethylene glycol were mixed in 12 kg of pure water according to a mass ratio of 3.00 Kg:2.24 Kg:0.0049 Kg:0.28 Kg:0.07 Kg.

### [Comparative Example 4]

The preparation process of the lithium-ion battery of Comparative Example 4 was substantially the same as that of Example 1, with the difference being that, in Comparative Example 4, the iron-to-phosphorus ratio of the first iron phosphate serving as the second iron source was 0.92.

### 2) Physical characterization

2.1) Measurement of primary particle size: a ZEISS sigma 300 scanning electron microscope was used for capturing images at 10,000x magnification, measuring software Nano Measurer 1.2 was employed to measure short sides of 80 to 120 primary particles of iron oxide, and an average value was calculated to obtain the primary particle size.

2.2) Measurement of iron-to-phosphorus ratio: the Fe content and the P content were determined using the potassium dichromate titration method and the quinoline phosphomolybdate gravimetric method, respectively, and the iron-to-phosphorus ratio was then calculated using the formula: (Fe content × 0.5546)/P content. For specific operations, refer to the standard HG/T 4701-2021.

2.3) Measurement of volume average particle size Dv50 of mixed slurry: an appropriate amount of a sample to be tested (sample concentration ensuring 8% to 12% obscuration) was taken and added to 20 ml of deionized water, ultrasonic treatment was applied for 5 min (53 kHz/120 W) to ensure complete dispersion of the sample, and then the sample was measured according to the standard GB/T 19077-2016/ISO 13320:2009 using a Malvern 3000 (MasterSizer 3000) laser particle size analyzer.

**Table 1 Experiment Parameters for Examples 1 to 31 and Comparative Examples 1 to 4**

| Group | First iron source | Iron-to-phosphoru s ratio of first iron phosphate | Primar y particle size of first iron source (µm) | Second iron source | Iron-to-phosphoru s ratio of second iron phosphate | Molar ratio value of iron elemen t in first iron source to iron elemen t in second iron source | Mixe d slurry Dv50 (µm) | Molar ratio of Li, Fe, and P |
|---|---|---|---|---|---|---|---|---|
| Example 1 | Iron oxide | / | 0.2 | Second iron phosphat e | 0.95 | 1.5 | 0.45 | 1.002:0.962:1 |
| Example 2 | Iron oxide | / | 0.2 | Ferrous oxalate | / | 2.0 | 0.45 | 1.0025:0.970: 1 |
| Example 3 | First iron phosphat e | 0.975 | / | Second iron phosphat e | 0.95 | 1.5 | 0.45 | 1.002:0.965:1 |
| Example 4 | First iron phosphat e | 0.975 | / | Ferrous oxalate | / | 1.5 | 0.45 | 1.002:0.973:1 |
| Example 5 | Iron oxide | / | 0.2 | Second iron phosphat e | 0.93 | 1.5 | 0.45 | 1.002:0.954:1 |
| Example 6 | Iron oxide | / | 0.2 | Second iron phosphat e | 0.94 | 1.5 | 0.45 | 1.002:0.958:1 |
| Example 7 | Iron oxide | / | 0.2 | Second iron phosphat e | 0.96 | 1.5 | 0.45 | 1.002:0.966:1 |
| Example 8 | Iron oxide | / | 0.4 | Second iron phosphat e | 0.95 | 1.5 | 0.45 | 1.002:0.962:1 |
| Example 9 | Iron oxide | / | 0.6 | Second iron phosphat e | 0.95 | 1.5 | 0.45 | 1.002:0.962:1 |
| Example 10 | Iron oxide | / | 1 | Second iron phosphat e | 0.95 | 1.5 | 0.45 | 1.002:0.962:1 |
| Example 11 | Iron oxide | / | 0.2 | Second iron phosphat e | 0.95 | 4 | 0.45 | 1.002:0.962:1 |
| Example 12 | Iron oxide | / | 0.2 | Second iron phosphat e | 0.95 | 0.5 | 0.45 | 1.002:0.955:1 |
| Example 13 | Iron oxide | / | 0.2 | Second iron phosphat e | 0.95 | 0.8 | 0.45 | 1.002:0.959:1 |
| Example 14 | Iron oxide | / | 0.2 | Second iron phosphat e | 0.95 | 2.5 | 0.45 | 1.002:0.964:1 |
| Example 15 | **Iron** oxide | / | 0.2 | Second iron phosphat e | 0.95 | 0.25 | 0.45 | 1.0015:0.952: 1 |
| Example 16 | Iron oxide | / | 0.2 | Second iron phosphat e | 0.95 | 8 | 0.45 | 1.002:0.959:1 |
| Example 17 | Iron oxide | / | 0.2 | Second iron phosphat e | 0.95 | 1.5 | 0.3 | 1.002:0.962:1 |
| Example 18 | Iron oxide | / | 0.2 | Second iron phosphat e | 0.95 | 1.5 | 0.8 | 1.002:0.962:1 |
| Example 19 | Iron oxide | / | 0.2 | Second iron phosphat e | 0.95 | 1.5 | 0.2 | 1.0015:0.953: 1 |
| Example 20 | Iron oxide | / | 0.2 | Second iron phosphat e | 0.95 | 1.5 | 1 | 1.0015:0.953: 1 |
| Example 21 | First iron phosphat e | 0.985 | / | Second iron phosphat e | 0.95 | 0.75 | 0.45 | 1.002:0.965:1 |
| Example 22 | First iron phosphat e | 0.97 | / | Second iron phosphat e | 0.95 | 0.75 | 0.45 | 1.002:0.959:1 |
| Example 23 | Iron oxide | / | 0.05 | Second iron phosphat e | 0.95 | 1.5 | 0.45 | 1.002:0.962:1 |
| Example 24 | Iron oxide | / | 0.1 | Second iron phosphat e | 0.95 | 1.5 | 0.45 | 1.002:0.962:1 |
| Example 25 | First iron phosphat e | 0.97 | / | Second iron phosphat e | 0.955 | 1.5 | 0.45 | 1.004:0.959:1 |
| Example 26 | First iron phosphat e | 0.98 | / | Second iron phosphat e | 0.955 | 1.5 | 0.35 | 1.005:0.963:1 |
| Example 27 | First iron phosphat e | 0.975 | / | Second iron phosphat e | 0.945 | 1.5 | 0.50 | 1.003:0.954:1 |
| Example 28 | First iron phosphat e | 0.975 | / | Second iron phosphat e | 0.945 | 1.5 | 0.50 | 1.01:0.965:1 |
| Example 29 | Iron oxide | / | 0.2 | Second iron phosphat e | 0.95 | 1.5 | 0.45 | 1.002:0.962:1 |
| Example 30 | Iron oxide | / | 0.2 | Second iron phosphat e | 0.95 | 1.5 | 0.45 | 1.002:0.962:1 |
| Example 31 | Iron oxide | / | 0.2 | Second iron phosphat e | 0.95 | 1.5 | 0.45 | 1.002:0.962:1 |
| Comparativ e Example 1 | Iron oxide | / | 0.2 | / | / | / | 0.45 | 1.001:0.955:1 |
| Comparativ e Example 2 | Iron oxide | / | 0.2 | First iron phosphat e | 0.985 | 1.5 | 0.45 | 1.001:0.958:1 |
| Comparativ e Example 3 | / | / | / | Ferrous oxalate | / | / | 0.45 | 1.001:0.955:1 |
| Comparativ e Example 4 | Iron oxide | / | 0.2 | Second iron phosphat e | 0.92 | 1.5 | 0.45 | 1.000:0.920:1 |

### 3) Performance testing

3.1) Measurement of powder compaction density of lithium iron phosphate: a specific amount of powder was placed in a specialized compaction mold with a known diameter (for example, the specialized mold could be a Suns UTM7305). A metal sheet was respectively placed above and below the mold, with the powder located therebetween. A pressure of 3 T was applied while simultaneously measuring the corresponding powder thickness. The compaction density was calculated using the formula ρ = m/v. For the specific operation, refer to the standard GB/T24533-2009. Test results are shown in Table 2.

3.2) Testing of 0.1C rate performance: under ambient temperature (25°C) conditions, a battery was charged at a constant current of 0.1 C to 3.75 V, then charged at a constant voltage of 3.75 V until the current reached 0.05 C, followed by a 5 min rest. The battery was then discharged at 0.1 C to 2.0 V. This cycle was repeated twice. An average discharge capacity obtained from the two cycles was recorded. Test results are shown in Table 2.

3.3) Testing of 1C rate performance: under ambient temperature (25°C) conditions, a battery was charged at a constant current of 0.1 C to 3.75 V, then charged at a constant voltage of 3.75 V until the current reached 0.05 C, followed by a 5 min rest. The battery was then discharged at 0.1 C to 2.0 V. This cycle was repeated twice. Subsequently, the battery was charged at a constant current of 1 C to 3.75 V, then charged at a constant voltage of 3.75 V until the current reached 0.05 C, followed by a 5 min rest. Finally, the battery was discharged at 1 C. An average 1C discharge capacity obtained from two cycles was recorded. Test results are shown in Table 2.

3.4) FTIR spectrograms of the positive electrode materials from each example and comparative example were tested using a Fourier transform infrared spectrometer, and characteristic absorption peak positions of PO₄³⁻ are recorded in Table 2.

3.5) An electrode plate was cut perpendicular to a surface of the positive electrode plate having the positive electrode film layer using an argon ion beam to expose a cross-section. The cross-section was photographed using a scanning electron microscope. Particle sizes of the active material were statistically analyzed using a length-diameter statistical method. The average particle size was the total particle size value divided by the total quantity of particles. Since particles with 0<xi≤50 nm were prone to agglomeration, leading to significant statistical errors and difficulty in clear individual identification, particles with a particle size of 0<*xᵢ*≤50 nm were excluded from the statistical analysis during particle size statistics process. The area of the positive electrode material was obtained through statistical analysis of the acquired scanning electron microscope images of the cross-section of the positive electrode plate using Avizo 3D software.

3.6) Carbon content: the carbon content was the mass percentage of carbon element in a lithium iron phosphate material (unit: %). It was determined with reference to GB/T 21023-2006 "Determination of Total Carbon and Sulfur Content in Iron and Steel: Infrared Absorption Method after Combustion in High-frequency Induction Furnace", using a Dekai HCS infrared carbon-sulfur analyzer.

3.7) Powder resistivity test: powder resistivity characterizes the electronic conductivity of a lithium iron phosphate material (unit: Ω·cm). It was determined with reference to GB/T 30835-2014 "Carbon Composite Lithium Iron Phosphate Positive Electrode Material for Lithium-Ion Batteries", using an ST-2722 powder resistivity analyzer from Suzhou Lattice Electronics Co., Ltd.

**Table 2 Performance Parameters for Examples 1 to 31 and Comparative Examples 1 to 4**

| Group | Powder compactio n density (g/cm³) | 0.1C (mAh/g ) | 1C (mAh/g ) | Characteristi c absorption peak position of PO₄³⁻ (cm⁻¹) | Quantity content of phosphate -based positive electrode material with particle size in a range of 50 nm to 200 nm (%) | Cross-sectional area percentag e content of phosphate -based positive electrode material with particle size of not less than 1500 nm (%) | Carbo n mass conten t (%) | Powder resistivit y (Ω·cm) |
|---|---|---|---|---|---|---|---|---|
| Example 1 | 2.60 | 158.6 | 143.4 | 987.76 | 69.8 | 45.6 | 1.35 | 55.3 |
| Example 2 | 2.58 | 158.2 | 142.3 | 986.94 | 68.0 | 43.9 | 1.38 | 50.7 |
| Example 3 | 2.61 | 157.8 | 142.5 | 987.94 | 69.4 | 51.5 | 1.30 | 62.2 |
| Example 4 | 2.57 | 158.1 | 142.9 | 987.19 | 69.7 | 39.7 | 1.40 | 48.5 |
| Example 5 | 2.58 | 157.6 | 141.1 | 988.44 | 66.4 | 47.8 | 1.35 | 54.0 |
| Example 6 | 2.61 | 157.4 | 141.4 | 988.94 | 67.6 | 55.6 | 1.28 | 64.9 |
| Example 7 | 2.64 | 157.1 | 140.8 | 989.69 | 66.8 | 68.9 | 1.21 | 78.6 |
| Example 8 | 2.55 | 157.4 | 141.6 | 988.94 | 68.1 | 38.7 | 1.41 | 46.9 |
| Example 9 | 2.54 | 156.4 | 140.3 | 991.43 | 67.1 | 40.0 | 1.38 | 49.4 |
| Example 10 | 2.50 | 155.7 | 139.1 | 993.18 | 65.7 | 34.3 | 1.43 | 42.6 |
| Example 11 | 2.50 | 156.6 | 136.4 | 990.93 | 57.9 | 41.8 | 1.48 | 38.7 |
| Example 12 | 2.53 | 156.1 | 136.2 | 992.18 | 58.4 | 50.7 | 1.38 | 48.2 |
| Example 13 | 2.55 | 157.1 | 137.2 | 989.69 | 58.7 | 53.0 | 1.39 | 48.4 |
| Example 14 | 2.51 | 157.9 | 142.6 | 987.69 | 69.4 | 34.0 | 1.45 | 42.1 |
| Example 15 | 2.54 | 155.8 | 135.1 | 992.93 | 56.6 | 48.8 | 1.41 | 44.6 |
| Example 16 | 2.50 | 155.6 | 134.6 | 993.43 | 55.9 | 47.7 | 1.43 | 43.1 |
| Example 17 | 2.58 | 158.4 | 142.1 | 986.45 | 67.1 | 44.5 | 1.39 | 49.6 |
| Example 18 | 2.56 | 158.7 | 143.2 | 985.70 | 69.1 | 36.7 | 1.45 | 43.1 |
| Example 19 | 2.54 | 155.3 | 135.4 | 994.17 | 58.2 | 57.1 | 1.32 | *55.5* |
| Example 20 | 2.51 | 155.7 | 135.8 | 993.18 | 58.3 | 46.4 | 1.41 | 45.0 |
| Example 21 | 2.58 | 157.6 | 142.5 | 988.44 | 69.8 | 43.3 | 1.35 | 54.0 |
| Example 22 | 2.56 | 157.8 | 141.9 | 987.94 | 67.9 | 40.2 | 1.40 | 47.4 |
| Example 23 | 2.53 | 157.2 | 141.5 | 989.44 | 68.2 | 34.6 | 1.44 | 42.9 |
| Example 24 | 2.54 | 157.5 | 141.8 | 988.69 | 68.3 | 36.0 | 1.43 | 43.9 |
| Example 25 | 2.62 | 162.1 | 139.8 | 975.99 | 55.1 | 66.0 | 1.50 | 41.1 |
| Example 26 | 2.55 | 162.6 | 140.3 | 974.13 | 55.3 | 42.4 | 1.70 | 26.5 |
| Example 27 | 2.65 | 160.6 | 133.2 | 982.33 | 45.4 | 65.4 | 1.34 | 58.4 |
| Example 28 | 2.55 | 164.5 | 146.2 | 971.24 | 68.3 | 41.8 | 1.80 | 22.2 |
| Example 29 | 2.68 | 158.0 | 134.6 | 987.44 | 41.3 | 72.4 | 1.18 | 88.2 |
| Example 30 | 2.50 | 157.8 | 140.7 | 987.94 | 73.1 | 32.7 | 1.88 | 17.1 |
| Example 31 | 2.55 | 157.7 | 138.6 | 988.19 | 69.3 | 44.4 | 1.67 | 25.9 |
| Comparativ e Example 1 | 2.34 | 155.1 | 131.1 | 995.35 | 49.8 | 23.0 | 0.92 | 140.6 |
| Comparativ e Example 2 | 2.43 | 154.7 | 133.7 | 997.11 | 55.7 | 28.9 | 1.62 | 27.5 |
| Comparativ e Example 3 | 2.42 | 154.9 | 133.9 | 996.41 | 55.7 | 26.3 | 0.89 | 167.5 |
| Comparativ e Example 4 | 2.31 | 151.2 | 129.5 | 1001.49 | 53.2 | 21.5 | 1.69 | 22.1 |

According to Examples 1 to 31 and Comparative Examples 1 to 4, it can be seen that when two different iron sources are used as raw materials for preparing lithium iron phosphate, the powder compaction density of the lithium iron phosphate can all be greater than 2.5 g/cm³, and the capacity of the batteries is improved.

According to Examples 1 to 4 and 21 to 22 and Comparative Examples 1 to 4, it can be seen that whether the first iron source is selected from the iron oxide or the first iron phosphate with the iron-to-phosphorus ratio of 0.97 to 0.985, and the second iron source is selected from the second iron phosphate with the iron-to-phosphorus ratio of 0.93 to 0.96 or the ferrous oxalate, all can function to improve the compaction density of the lithium iron phosphate and increase the battery capacity.

According to Examples 1 and 5 to 7, by setting the iron-to-phosphorus ratio of the second iron phosphate serving as the second iron source to 0.93 to 0.96, particularly to 0.94 to 0.96, the batteries have good performance.

According to Examples 1, 8 to 10, and 23 to 24, by setting the primary particle size of the iron oxide to 0.05 µm to 0.6 µm, the batteries have higher capacity. Furthermore, by limiting the primary particle size of the iron oxide to be not more than 0.4 µm, the compaction density of the lithium iron phosphate can be further improved, thereby further improving the battery capacity.

According to Examples 1 and 11 to 16, by setting the molar ratio value of iron element in the first iron source to iron element in the second iron source to 0.5 to 4, the lithium iron phosphate exhibits higher compaction density, and the batteries also have higher capacity.

According to Examples 1 and 17 to 20, by setting the volume average particle size Dv50 of the mixed slurry to 0.3 µm to 0.8 µm, the lithium iron phosphate exhibits higher compaction density, and the batteries also have higher capacity.

According to Examples 1 and 21 to 22, by setting the iron-to-phosphorus ratio of the first iron phosphate serving as the first iron source to 0.97 to 0.985, the batteries have better performance.

In Examples 25 to 28, the molar ratio of lithium element in the lithium source to phosphorus element in the phosphorus source is within the range of (1.003 to 1.01):1, which leads to a decrease in the characteristic absorption peak position of PO₄³⁻, and a surface of the lithium iron phosphate has lower Li-Fe antisite defects. Consequently, the corresponding batteries exhibit higher 0.1C discharge capacity, indicating that the batteries have higher reversible capacity.

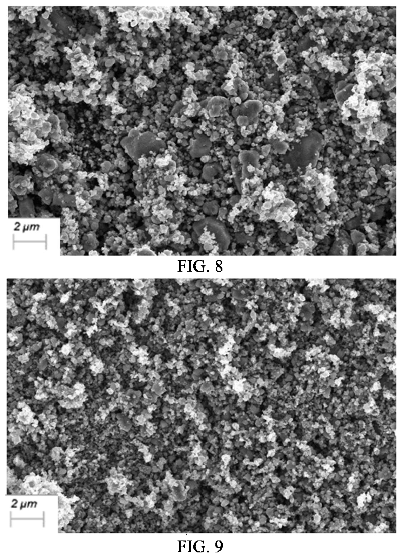

FIG. 8 is an SEM image of lithium iron phosphate according to an embodiment of the present application, which was the lithium iron phosphate prepared by the method described in Example 1. From the SEM image in FIG. 8, it can be seen that the prepared lithium iron phosphate has both larger primary particle sizes and smaller primary particle sizes. FIG. 9 is an SEM image of lithium iron phosphate according to an embodiment of related art, which was the lithium iron phosphate prepared by the method described in Comparative Example 1. From FIG. 9, it can be seen that the prepared lithium iron phosphate has uniform primary particle sizes.

It should be noted that the present application is not limited to the embodiments above. The embodiments described above are merely exemplary, and embodiments having substantially the same technical idea and the same effects within the scope of the technical solution of the present application are all included in the technical scope of the present application. In addition, other embodiments constructed by applying various modifications conceivable to those skilled in the art to the embodiments and combining some of the constituent elements of the embodiments without departing from the scope of the essence of the present application are also included in the scope of the present application.

## Claims

1. A preparation method for lithium iron phosphate, comprising:
dissolving a first iron source, a second iron source, a lithium source, and a phosphorus source in a solvent to obtain a mixed slurry; and
subjecting the mixed slurry to sintering treatment to obtain lithium iron phosphate, wherein
the first iron source comprises at least one of iron oxide or first iron phosphate, and the second iron source comprises at least one of second iron phosphate or ferrous oxalate;
an iron-to-phosphorus ratio of the first iron phosphate is 0.97 to 0.985, and an iron-to-phosphorus ratio of the second iron phosphate is 0.93 to 0.96.

2. The method according to claim 1, wherein the iron-to-phosphorus ratio of the second iron phosphate is 0.94 to 0.96.

3. The method according to claim 1 or 2, wherein a molar ratio value of iron element in the first iron source to iron element in the second iron source is 0.5 to 4.

4. The method according to any one of claims 1 to 3, wherein a volume average particle size Dv50 of the mixed slurry is 0.3 µm to 0.8 µm.

5. The method according to any one of claims 1 to 4, wherein a molar ratio of a sum of iron element in the first iron source and iron element in the second iron source to lithium element in the lithium source to phosphorus element in the phosphorus source is (0.9 to 1):(0.96 to 1.06):(0.95 to 1.05).

6. The method according to claim 5, wherein a molar ratio of lithium element in the lithium source to phosphorus element in the phosphorus source is (1.003 to 1.01):1.

7. The method according to any one of claims 1 to 6, wherein the first iron source comprises iron oxide, and the second iron source comprises second iron phosphate.

8. The method according to claim 7, wherein a primary particle size of the iron oxide is 0.05 µm to 0.6 µm.

9. The method according to claim 8, wherein the primary particle size of the iron oxide is 0.05 µm to 0.4 µm.

10. The method according to any one of claims 1 to 9, wherein the sintering treatment comprises:
in an inert gas, increasing a temperature of the mixed slurry to 450°C to 600°C and maintaining for 2 h to 5 h, and then increasing the temperature to 700°C to 850°C and maintaining for 6 h to 15 h.

11. The method according to any one of claims 1 to 10, further comprising:
dissolving a carbon source in the solvent to jointly form the mixed slurry, wherein
the carbon source comprises at least one of sucrose, glucose, dextrin, citric acid, fructose, or starch; and
a mass ratio value of the carbon source to the lithium iron phosphate is 0.01 to 0.1.

12. The method according to any one of claims 1 to 11, further comprising:
dissolving a dispersant in the solvent to jointly form the mixed slurry, wherein
the dispersant comprises at least one of polyethylene glycol, polyvinyl alcohol, or polyvinylpyrrolidone; and
a mass ratio value of the dispersant to the lithium iron phosphate is 0.005 to 0.08.

13. The method according to any one of claims 1 to 12, further comprising:
dissolving an additive in the solvent to jointly form the mixed slurry, wherein
the additive comprises a compound containing at least one element selected from Ti, Ga, Sr, W, Mg, Si, Y, Zr, B, Mo, or La; and
a mass ratio value of the additive to the lithium iron phosphate is 0.0001 to 0.0005; or
the additive comprises a substance containing at least one element selected from Al, Na, K, Mg, Cu, Mn, Cr, Zn, Pb, Ca, Co, Ni, Sr, Nb, Ti, V, B, S, Si, N, F, Cl, or Br.

14. The method according to any one of claims 1 to 13, wherein the lithium source comprises at least one of lithium dihydrogen phosphate, lithium carbonate, lithium hydroxide, lithium phosphate, lithium acetate, or lithium oxalate.

15. The method according to any one of claims 1 to 14, wherein the phosphorus source comprises at least one of phosphoric acid, ammonium dihydrogen phosphate, diammonium hydrogen phosphate, or lithium dihydrogen phosphate.

16. A positive electrode active material, comprising lithium iron phosphate prepared by the preparation method according to any one of claims 1 to 15.

17. The positive electrode active material according to claim 16, wherein a compaction density of the lithium iron phosphate under 3 T is greater than or equal to 2.5 g/cm³.

18. The positive electrode active material according to claim 16 or 17, wherein in an FTIR spectrogram of the lithium iron phosphate, a characteristic absorption peak position of PO₄³⁻ is ≤ 995 cm⁻¹.

19. The positive electrode active material according to any one of claims 16 to 18, wherein a powder compaction density of the lithium iron phosphate under 3 T ranges from 2.5 g/cm³ to 2.65 g/cm³.

20. The positive electrode active material according to any one of claims 16 to 19, wherein the powder compaction density of the lithium iron phosphate under 3 T ranges from 2.55 g/cm³ to 2.65 g/cm³.

21. The positive electrode active material according to any one of claims 16 to 20, wherein in an FTIR spectrogram of a phosphate-based positive electrode material, a characteristic absorption peak position of PO₄³⁻ is ≤ 984 cm⁻¹, and optionally the characteristic absorption peak position of PO₄³⁻ is ≤ 982.5 cm⁻¹.

22. A phosphate-based positive electrode material, wherein in an FTIR spectrogram of the phosphate-based positive electrode material, a characteristic absorption peak position of PO₄³⁻ is ≤ 995 cm⁻¹, and a powder compaction density of the phosphate-based positive electrode material under 226.0738 MPa is 2.50 g/cm³ or above.

23. The phosphate-based positive electrode material according to claim 22, wherein the powder compaction density of the phosphate-based positive electrode material under 226.0738 MPa ranges from 2.55 g/cm³ to 2.65 g/cm³.

24. The phosphate-based positive electrode material according to claim 22 or 23, wherein in the FTIR spectrogram of the phosphate-based positive electrode material, the characteristic absorption peak position of PO₄³⁻ is ≤ 982.5 cm⁻¹.

25. The phosphate-based positive electrode material according to any one of claims 22 to 24, wherein the phosphate-based positive electrode material comprises at least one of lithium iron phosphate, a doping modified substance thereof, and/or a coating modified substance thereof; optionally, the phosphate-based positive electrode material comprises a material having a molecular formula of LiₘAₐFeₓD_{d}P_{y}EₑO_{z}Gg, wherein A comprises at least one element selected from Al, Na, K, or Mg; D comprises at least one element selected from Cu, Mn, Cr, Zn, Pb, Ca, Co, Ni, Sr, Nb, Ti, or V; E comprises at least one element selected from B, S, Si, or N; G comprises at least one element selected from S, F, Cl, or Br; m is selected from a range of 0.5 to 1.15; a is selected from a range of 0 to 0.1; x is selected from a range of 0.5 to 1; d is selected from a range of 0 to 0.5; y is selected from a range of 0.5 to 1; e is selected from a range of 0 to 0.5; z is selected from a range of 3.5 to 4; and g is selected from a range of 0 to 0.5.

26. The phosphate-based positive electrode material according to any one of claims 22 to 25, wherein the phosphate-based positive electrode material further comprises carbon, a mass content of the carbon in the phosphate-based positive electrode material satisfies 1.00% ≤ Wc ≤ 1.90%, and/or a powder resistivity of the phosphate-based positive electrode material under 8 MPa satisfies S ≤ 90 Ω·cm.

27. A positive electrode plate, comprising:
a positive electrode current collector and a positive electrode film layer disposed on at least one side of the positive electrode current collector, wherein
the positive electrode film layer comprises lithium iron phosphate prepared by the preparation method according to any one of claims 1 to 15, or the positive electrode active material according to any one of claims 16 to 21, or the phosphate-based positive electrode material according to any one of claims 22 to 26.

28. The positive electrode plate according to claim 27, wherein the positive electrode film layer satisfies one or more of the following conditions:
1) a quantity content of the phosphate-based positive electrode material with a particle size in a range of 50 nm to 200 nm is 40% to 80%; and
2) a cross-sectional area percentage content of the phosphate-based positive electrode material with a particle size of not less than 1500 nm is 30% to 80%.

29. A battery, comprising the positive electrode plate according to claim 27 or 28.

30. A power-consuming device, comprising the battery according to claim 29.
